# EUROPEAN PATENT SPECIFICATION

(11) **EP 4 467 832 B1**
(45) Date of publication and mention of the grant of the patent: **13.05.2026**
(21) Application number: 24732839.6
(22) Date of filing: 28.02.2024
(51) Int. Cl.: F16C 32/04, H02K 7/09

(54) **MAGNETIC BEARING CONTROL DEVICE, MAGNETIC BEARING DEVICE, AND TURBOMACHINERY**
MAGNETLAGERSTEUERUNGSVORRICHTUNG, MAGNETLAGERVORRICHTUNG UND TURBOMASCHINE
DISPOSITIF DE COMMANDE DE PALIER MAGNÉTIQUE, DISPOSITIF DE PALIER MAGNÉTIQUE ET TURBOMACHINE

(30) Priority: 31.03.2023 JP 2023058886
(43) Date of publication of application: 27.11.2024
(73) Proprietor: DAIKIN INDUSTRIES, LTD., Osaka-shi, Osaka 530-0001 (JP)
(72) Inventor: FUJIMOTO Shumpei, Osaka (JP); SAKAWAKI Atsushi, Osaka (JP); HIBINO Hiroshi, Osaka (JP)
(74) Representative: Goddar, Heinz J.
(86) International application number: PCT/JP2024/007369
(87) International publication number: WO 2024/202872

(56) References cited:
- JP-A- H03 139 142
- JP-A- H03 139 142
- JP-A- H11 166 532
- JP-A- H11 166 532
- US-A1- 2018 195 772
- US-A1- 2018 195 772

## Description

### TECHNICAL FIELD

The present disclosure relates to a magnetic bearing control device, a magnetic bearing device, and a turbo machine.

### BACKGROUND ART

Patent Document 1 discloses a magnetic bearing device including a protective bearing (touchdown bearing). JP H03 139142 discloses a magnetic bearing control device according to the preamble of claims 1, 2, and 6-8.

### CITATION LIST

### PATENT DOCUMENT

Patent Document 1: Japanese Unexamined Patent Publication No. 2019-173823

### SUMMARY OF THE INVENTION

### TECHNICAL PROBLEM

A protective bearing of a magnetic bearing device reduces contact between a magnetic bearing and a rotating body by coming into contact with the rotating body earlier than the magnetic bearing when the rotating body moves. In order that the protective bearing can function effectively, it is necessary to adjust a reference position of the rotating body with respect to the protective bearing. In general, before magnetic levitation control is performed on the rotating body, the position of the rotating body with respect to the protective bearing is adjusted while having the electromagnetic force of the magnetic bearing act on the rotating body.

The electromagnetic force made to act on the rotating body by the magnetic bearing at a position adjustment of the rotating body with respect to the protective bearing may cause the rotating body to start moving with a great force and come into strong contact with the protective bearing, and the protective bearing and a component fixed thereto may be damaged.

It is an object of the present disclosure to reduce, in a magnetic bearing device, damage of a protective bearing and a component fixed thereto at a position adjustment of a rotating body with respect to the protective bearing.

### SOLUTION TO THE PROBLEM

The problems are solved by independent claims 1, 2, and 6-8. Dependent claims 3-5, and 9-12 provide preferred solutions. A first aspect of the present disclosure is directed to a magnetic bearing control device (90). The magnetic bearing control device (90) controls a magnetic bearing device (10). The magnetic bearing device (10) includes: rotating body (A); a first magnetic bearing (B1) supporting the rotating body (A) in a first direction (D1), the first direction (D1) being one of an axial direction (X) or a radial direction (R) of the rotating body (A); a first protective bearing (C1) supporting the rotating body (A) in the first direction (D1) to reduce contact between the rotating body (A) and the first magnetic bearing (B1); and a second protective bearing (C2) supporting the rotating body (A) in a second direction (D2), the second direction (D2) being the other one of the axial direction (X) or the radial direction (R) of the rotating body (A). The first magnetic bearing (B1) receives a first current (J1) to make a first electromagnetic force (F1) act on the rotating body (A) in the first direction (D1). At a position adjustment time (Q) at which a first-direction position (H1) of the rotating body (A) in the first direction (D1) with respect to the first protective bearing (C1) is adjusted, the magnetic bearing control device (90) controls the first current (J1) to reduce a speed (U) of the rotating body (A) at a time of contact between the rotating body (A) and the first protective bearing (C1).

According to the first aspect, the magnetic bearing control device (90) reduces the speed (U) of the rotating body (A) at the time of contact between the rotating body (A) and the first protective bearing (C1) at the position adjustment time (Q) at which the first-direction position (H1) of the rotating body (A) with respect to the first protective bearing (C1) is adjusted. In the magnetic bearing device (10), it is possible to reduce damage of the first protective bearing (C1) and the component fixed thereto at the position adjustment time (Q) at which the first-direction position (H1) of the rotating body (A) with respect to the first protective bearing (C1) is adjusted.

A second aspect of the present disclosure is an embodiment of the first aspect. In the second aspect, the magnetic bearing control device (90) repeatedly executes a first operation (M1) of supplying the first current (J1) of a predetermined value (J1v) and then stopping the supply of the first current (J1) and a second operation (M2) of increasing the predetermined value (J1v) when the first-direction position (H1) of the rotating body (A) does not change from that before the supply of the first current (J1) and decreasing the predetermined value (J1v) when the first-direction position (H1) of the rotating body (A) has changed from that before the supply of the first current (J1).

According to the second aspect, the first operation (M1) and the second operation (M2) are repeatedly performed, so that the first-direction position (H1) of the rotating body (A) with respect to the first protective bearing (C1) changes in small steps. This is more advantageous in reducing the speed (U) of the rotating body (A) at the time of contact between the rotating body (A) and the first protective bearing (C1).

A third aspect of the present disclosure is an embodiment of the first aspect. In the third aspect, the magnetic bearing control device (90) executes a third operation (M3) of increasing the first current (J1) until a change in the first-direction position (H1) of the rotating body (A) is detected and a fourth operation (M4) of reducing the first current (J1) to be in a range greater than zero after the change in the first-direction position (H1) of the rotating body (A) has been detected.

According to the third aspect, the first current (J1) for the first magnetic bearing (B1) is reduced to be in the range greater than zero; therefore, the speed (U) of the rotating body (A) at the time of contact between the rotating body (A) and the first protective bearing (C1) can be reduced without stopping the movement of the rotating body (A).

A fourth aspect of the present disclosure is an embodiment of the third aspect. In the fourth aspect, the fourth operation (M4) reduces the first current (J1) to a predetermined value (J1v) greater than zero.

According to the fourth aspect, it is easy to reduce the speed (U) of the rotating body (A) at the time of contact.

A fifth aspect of the present disclosure is an embodiment of the third or fourth aspect. In the fifth aspect, the fourth operation (M4) reduces the first current (J1) such that the speed (U) of movement of the rotating body (A) in the first direction (D1) is constant.

According to the fifth aspect, it is possible to reduce the speed (U) of the rotating body (A) at the time of contact between the rotating body (A) and the first protective bearing (C1) without stopping the movement of the rotating body (A) in the first direction (D1).

A sixth aspect of the present disclosure is an embodiment of any one of the first to fifth aspects. In the sixth aspect, at the position adjustment time (Q), the magnetic bearing control device (90) supplies the first current (J1) at a current change rate (δa) smaller than the maximum current change rate (δ'a) of a case in which magnetic levitation control is performed on the rotating body (A).

According to the sixth aspect, reducing the current change rate (δa) at the position adjustment time (Q) reduces a rapid increase in the first current (J1) for the first magnetic bearing (B1). It is thus possible to reduce a rapid movement of the rotating body (A).

A seventh aspect of the present disclosure is an embodiment of any one of the first to sixth aspects. In the seventh aspect, the magnetic bearing control device (90) stops the supply of the first current (J1) after a polarity of a first voltage (E1) to be applied to the first magnetic bearing (B1) is reversed.

According to the seventh aspect, the first current (J1) for the first magnetic bearing (B1) can be reduced at a greater current change rate (in absolute value) as compared to a case in which the polarity of the first voltage (E1) to be applied to the first magnetic bearing (B1) is not reversed.

An eighth aspect of the present disclosure is an embodiment of any one of the first to seventh aspects. In the eighth aspect, the magnetic bearing device (10) includes a second magnetic bearing (B2) supporting the rotating body (A) in the second direction (D2), and the second magnetic bearing (B2) receives a second current (J2) to make a second electromagnetic force (F2) act on the rotating body (A) in the second direction (D2).

A ninth aspect of the present disclosure is an embodiment of the eighth aspect. In the ninth aspect, the magnetic bearing control device (90) supplies the second current (J2) to the second magnetic bearing (B2) such that a normal force (N) of the second protective bearing (C2) acting on the rotating body (A) is in a range smaller than that of when the supply of the first current (J1) and the second current (J2) is stopped, and greater than zero.

According to the ninth aspect, since the normal force (N) of the second protective bearing (C2) acting on the rotating body (A) is smaller than that of when the supply of the first current (J1) and the second current (J2) is stopped, it is possible to reduce the maximum static frictional force acting on the rotating body (A) when the first current (J1) is supplied to start movement of the rotating body (A). As a result, it is possible to reduce the first electromagnetic force (F1) acting on the rotating body (A) and reduce a rapid movement of the rotating body (A) in the first direction (D1), which is advantageous in reducing the speed (U) of the rotating body (A) at the time of contact between the rotating body (A) and the first protective bearing (C1).

A tenth aspect of the present disclosure is an embodiment of the eighth or ninth aspect. In the tenth aspect, the magnetic bearing control device (90) supplies the first current (J1) or the second current (J2) so as to vibrate the rotating body (A) in a circumferential direction (θ).

According to the tenth aspect, the friction generated on the rotating body (A) is changed from static friction to dynamic friction by the vibration of the rotating body (A) in the circumferential direction (θ). It is therefore possible to reduce the frictional force acting on the rotating body (A) when the first current (J1) is supplied to the first magnetic bearing (B1) to start movement of the rotating body (A). As a result, it is possible to reduce the first electromagnetic force (F1) acting on the rotating body (A) and reduce a rapid movement of the rotating body (A) in the first direction (D1), which is advantageous in reducing the speed (U) of the rotating body (A) at the time of contact between the rotating body (A) and the first protective bearing (C1).

An eleventh aspect of the present disclosure is an embodiment of any one of the eighth to tenth aspects. In the eleventh aspect, the magnetic bearing control device (90) supplies the second current (J2) such that the normal force (N) of the second protective bearing (C2) acting on the rotating body (A) is greater than that of when the supply of the first current (J1) and the second current (J2) is stopped, after the first-direction position (H1) of the rotating body (A) is changed.

According to the eleventh aspect, the normal force (N) of the second protective bearing (C2) acting on the rotating body (A) is increased after the first-direction position (H1) of the rotating body (A) is changed. It is thus possible to increase the dynamic frictional force acting on the rotating body (A) and reduce a rapid movement of the rotating body (A) in the first direction (D1). This is advantageous in reducing the speed (U) of the rotating body (A) at the time of contact between the rotating body (A) and the first protective bearing (C1).

A twelfth aspect of the present disclosure is an embodiment of any one of the eighth to eleventh aspects. In the twelfth aspect, the first direction (D1) is the axial direction (X); the second direction (D2) is the radial direction (R); the first magnetic bearing (B1) is a thrust magnetic bearing (50); and the second magnetic bearing (B2) is a radial magnetic bearing (40).

A thirteenth aspect of the present disclosure is directed to a magnetic bearing device (10). The magnetic bearing device (10) includes the magnetic bearing control device (90) of any one of the first to twelfth aspects.

A fourteenth aspect of the present disclosure is directed to a turbo machine (1). The turbo machine (1) includes the magnetic bearing device (10) of the thirteenth aspect.

### BRIEF DESCRIPTION OF THE DRAWINGS

FIG. 1 is a sectional view of a magnetic bearing device (10) according to a first embodiment.
FIG. 2 illustrates position adjustment of a rotating body (A) with respect to a front protective bearing (60) according to the first embodiment.
FIG. 3 is a flowchart illustrating a method for reducing damage of the front protective bearing (60) and a component fixed thereto according to the first embodiment.
FIG. 4 is a graph illustrating the method for reducing damage of the front protective bearing (60) and the component fixed thereto according to the first embodiment.
FIG. 5 is equivalent to FIG. 3 and illustrates a second embodiment.
FIG. 6 is equivalent to FIG. 4 and illustrates the second embodiment.
FIG. 7 is equivalent to FIG. 2 and illustrates a third embodiment.
FIG. 8 is equivalent to FIG. 2 and illustrates a fourth embodiment.
FIG. 9 is equivalent to FIG. 2 and illustrates a fifth embodiment.
FIG. 10 illustrates position adjustment of a rotating body (A) with respect to a rear protective bearing (70) according to a sixth embodiment.

### DESCRIPTION OF EMBODIMENTS

### <First Embodiment>

### (Magnetic Bearing Device)

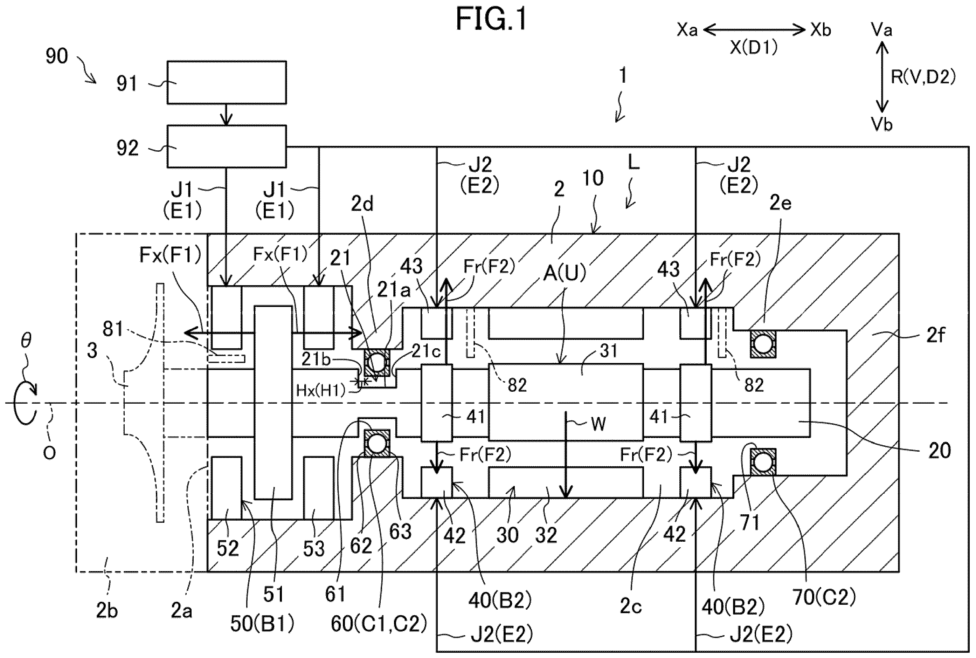

FIG. 1 is a sectional view of a magnetic bearing device (10) according to a first embodiment. The magnetic bearing device (10) is applied to a turbo compressor (1) as a turbo machine. The turbo compressor (1) is used for a refrigeration apparatus such as an air conditioner. The refrigeration apparatus includes a refrigerant circuit in which refrigerant circulates. The turbo compressor (1) compresses the refrigerant in the refrigerant circuit. The refrigerant circulates in the refrigerant circuit, thereby performing a vapor compression refrigeration cycle.

The turbo compressor (1) includes a housing (2), an impeller (3) as part of a rotating body (A), and the magnetic bearing device (10). The housing (2) and the impeller (3) will be described later.

The magnetic bearing device (10) includes a shaft (20) as part of the rotating body (A), a motor (30), a radial magnetic bearing (40) as a second magnetic bearing (B2), a thrust magnetic bearing (50) as a first magnetic bearing (B1), a front protective bearing (60) as a first protective bearing (C1) and a second protective bearing (C2), a rear protective bearing (70) as a second protective bearing (C2), an axial position sensor (81), a radial position sensor (82), and a magnetic bearing control device (90).

The axis (O) of the shaft (20) extends in the horizontal direction. The direction in which the axis (O) of the shaft (20) extends will be referred to as an axial direction (X) as a first direction (D1). The impeller (3) side in the axial direction (X) will be referred to as a front side in the axial direction (X). The side opposite to the impeller (3) in the axial direction (X) will be referred to as a rear side in the axial direction (X). The direction perpendicular to the axial direction (X) of the shaft (20) will be referred to as a radial direction (R) as a second direction (D2). A side away from the axis (O) of the shaft (20) in the radial direction (R) will be referred to as an outer (peripheral) side in the radial direction (R). A side closer to the axis (O) of the shaft (20) in the radial direction (R) will be referred to as an inner (peripheral) side in the radial direction (R). An upper side in the radial direction (R) in FIG. 1 corresponds to an upper side in the vertical direction (V), and will be simply referred to as an upper side. A lower side in the radial direction (R) in FIG. 1 corresponds to a lower side in the vertical direction (V), and will be simply referred to as a lower side. The direction of rotation of the shaft (20) about the axis (O) will be referred to as a circumferential direction (θ).

The inside of the housing (2) is divided in the axial direction (O) by a wall portion (2a). Both end portions of the housing (2) in the axial direction (O) are closed. A front space (2b) on the front side of the wall portion (2a) in the housing (2) houses a front end portion of the shaft (20) and the impeller (3). A rear space (2c) on the rear side of the wall portion (2a) in the housing (2) houses most of the shaft (20), the motor (30), the radial magnetic bearing (40), the thrust magnetic bearing (50), the front protective bearing (60), the rear protective bearing (70), the axial position sensor (81), and the radial position sensor (82).

The impeller (3) is fixed to the front end portion of the shaft (20) so as to rotate integrally with the shaft (20). The impeller (3) is housed in the front space (2b) in the housing (2). A suction pipe and a discharge pipe are connected to the front space (2b). Gas introduced into the front space (2b) through the suction pipe is compressed in the front space (2b) to have a high pressure, and is discharged to the outside through the discharge pipe.

The motor (30) is housed in the rear space (2c) in the housing (2). The motor (30) has a motor rotor (31) as part of the rotating body (A) and a motor stator (32). The motor rotor (31) is fixed to an intermediate portion of the shaft (20) so as to rotate integrally with the shaft (20). The motor stator (32) is fixed to the inner peripheral surface of the housing (2). The outer peripheral surface of the motor rotor (31) and the inner peripheral surface of the motor stator (32) face each other with a predetermined space therebetween in the radial direction (R). The motor (30) rotates the shaft (20).

There are two radial magnetic bearings (40). The two radial magnetic bearings (40) are housed in the rear space (2c) in the housing (2). The two radial magnetic bearings (40) are arranged with the motor (30) interposed therebetween in the axial direction (X).

Each of the radial magnetic bearings (40) includes a radial magnetic bearing rotor (41) as part of the rotating body (A), an upper radial magnetic bearing stator (42), and a lower radial magnetic bearing stator (43). The radial magnetic bearing rotor (41) is fixed to the shaft (20) so as to rotate integrally with the shaft (20). The upper radial magnetic bearing stator (42) is fixed to an upper portion of the inner peripheral surface of the housing (2). The lower radial magnetic bearing stator (43) is fixed to a lower portion of the inner peripheral surface of the housing (2). The outer peripheral surface of the radial magnetic bearing rotor (41) and the inner peripheral surfaces of the upper radial magnetic bearing stator (42) and the lower radial magnetic bearing stator (43) face each other with a space therebetween in the radial direction (R).

The thrust magnetic bearing (50) is housed in the rear space (2c) in the housing (2). The thrust magnetic bearing (50) is arranged closer to the front side than the radial magnetic bearing (40) in the axial direction (X). The thrust magnetic bearing (50) includes a thrust magnetic bearing rotor (51) as part of the rotating body (A), a front thrust magnetic bearing stator (52), and a rear thrust magnetic bearing stator (53).

The thrust magnetic bearing rotor (51) is fixed to the shaft (20) so as to rotate integrally with the shaft (20). The front thrust magnetic bearing stator (52) and the rear thrust magnetic bearing stator (53) are fixed to the inner peripheral surface of the housing (2). The front thrust magnetic bearing stator (52) and the rear thrust magnetic bearing stator (53) are in a circular ring shape. The front thrust magnetic bearing stator (52) is arranged closer to the front side than the thrust magnetic bearing rotor (51) in the axial direction (X). The rear thrust magnetic bearing stator (53) is arranged closer to the rear side than the thrust magnetic bearing rotor (51) in the axial direction (X). The front surface of the thrust magnetic bearing rotor (51) and the rear surface of the front thrust magnetic bearing stator (52) face each other with a space therebetween in the axial direction (X). The rear surface of the thrust magnetic bearing rotor (51) and the front surface of the rear thrust magnetic bearing stator (53) face each other with a space therebetween in the axial direction (X).

The front protective bearing (60) is housed in the rear space (2c) in the housing (2). The front protective bearing (60) is arranged between the radial magnetic bearing (40) and the thrust magnetic bearing (50) in the axial direction (X). The front protective bearing (60) is in a circular ring shape. The front protective bearing (60) is also called a touchdown bearing. The front protective bearing (60) is fixed to a protrusion (2d) in the inner peripheral surface of the housing (2), protruding inward in the radial direction (R).

A portion of an outer peripheral portion of the shaft (20) facing the front protective bearing (60) is provided with a recess (21) recessed inward in the radial direction (R). The recess (21) includes an inner bottom surface (21a) located on the inner side in the radial direction (R), a front surface (21b) located on the front side in the axial direction (R), and a rear surface (21c) located on the rear side in the axial direction (R). The inner peripheral surface (61) of the front protective bearing (60) faces the inner bottom surface (21a) of the recess (21) of the shaft (20) in the radial direction (R). The front surface (62) of the front protective bearing (60) faces the front surface (21b) of the recess (21) of the shaft (20) in the axial direction (R). The rear surface (63) of the front protective bearing (60) faces the rear surface (21c) of the recess (21) of the shaft (20) in the axial direction (R).

A space between the front surface (62) and rear surface (63) of the front protective bearing (60) and the front surface (21b) and rear surface (21c) of the recess (21), respectively, is smaller than a space between the thrust magnetic bearing rotor (51) and each of the front thrust magnetic bearing stator (52) and the rear thrust magnetic bearing stator (53). Further, a space between the inner peripheral surface (61) of the front protective bearing (60) and the inner bottom surface (21a) of the recess (21) is smaller than a space between the radial magnetic bearing rotor (41) and each of the upper radial magnetic bearing stator (42) and the lower radial magnetic bearing stator (43).

The rear protective bearing (70) is housed in the rear space (2c) in the housing (2). The rear protective bearing (70) is arranged closer to the rear side than the radial magnetic bearing (40) in the axial direction (X). The rear protective bearing (70) is in a circular ring shape. The rear protective bearing (70) is also called a touchdown bearing. The rear protective bearing (70) is fixed to a protrusion (2e) in the inner peripheral surface of the housing (2), protruding inward in the radial direction (R).

The inner peripheral surface (71) of the rear protective bearing (70) faces the outer peripheral surface of the shaft (20) in the radial direction (R). A space between the inner peripheral surface (71) of the rear protective bearing (70) and the outer peripheral surface of the shaft (20) is smaller than a space between the radial magnetic bearing rotor (41) and each of the upper radial magnetic bearing stator (42) and the lower radial magnetic bearing stator (43).

The axial position sensor (81) is housed in the rear space (2c) in the housing (2). The axial position sensor (81) is fixed to the wall portion (2a) of the housing (2) in the vicinity of the thrust magnetic bearing (50). A detection unit of the axial position sensor (81) faces the thrust magnetic bearing rotor (51). The axial position sensor (81) detects a gap between the detection unit of the axial position sensor (81) and the thrust magnetic bearing rotor (51).

There are two radial position sensors (82). The radial position sensors (82) are housed in the rear space (2c) in the housing (2). Each of the radial position sensors (82) is fixed to the inner peripheral surface of the housing (2) in the vicinity of the corresponding radial magnetic bearing (40). The detection unit of the radial position sensor (82) faces the outer peripheral surface of the shaft (20). The radial position sensor (82) detects a gap between the detection unit of the radial position sensor (82) and the outer peripheral surface of the shaft (20).

The rotating body (A) includes the impeller (3), the shaft (20), the motor rotor (31), the radial magnetic bearing rotor (41), and the thrust magnetic bearing rotor (51).

The thrust magnetic bearing (50) supports the rotating body (A) in the axial direction (X). The thrust magnetic bearing (50) makes a thrust electromagnetic force (Fx) as a first electromagnetic force (F1) act on the rotating body (A) in the axial direction (X). The thrust electromagnetic force (Fx) acts forward (Xa) in the axial direction (X) between the front thrust magnetic bearing stator (52) and the thrust magnetic bearing rotor (51). The thrust electromagnetic force (Fx) acts rearward (Xb) in the axial direction (X) between the rear thrust magnetic bearing stator (53) and the thrust magnetic bearing rotor (51).

The radial magnetic bearing (40) supports the rotating body (A) in the radial direction (R). The radial magnetic bearing (40) makes a radial electromagnetic force (Fr) as a second electromagnetic force (F2) act on the rotating body (A) in the radial direction (R). The radial electromagnetic force (Fr) acts outward in the radial direction (R) and upward (Va) in the vertical direction (V) between the upper radial magnetic bearing stator (42) and the radial magnetic bearing rotor (41). The radial electromagnetic force (Fr) acts outward in the radial direction (R) and downward (Vb) in the vertical direction (V) between the lower radial magnetic bearing stator (43) and the radial magnetic bearing rotor (41).

The front protective bearing (60) supports the rotating body (A) in the axial direction (X) to reduce contact between the rotating body (A) and the thrust magnetic bearing (50). The front protective bearing (60) reduces contact between the thrust magnetic bearing rotor (51) and each of the front thrust magnetic bearing stator (52) and the rear thrust magnetic bearing stator (53). The front protective bearing (60) comes into contact with the rotating body (A) earlier than the thrust magnetic bearing (50), when the rotating body (A) moves in the axial direction (X).

Further, the front protective bearing (60) supports the rotating body (A) in the radial direction (X) to reduce contact between the rotating body (A) and the radial magnetic bearing (40). The front protective bearing (60) reduces contact between the radial magnetic bearing rotor (41) and each of the upper radial magnetic bearing stator (42) and the lower radial magnetic bearing stator (43). The front protective bearing (60) comes into contact with the rotating body (A) earlier than the radial magnetic bearing (40), when the rotating body (A) moves in the radial direction (R).

The rear protective bearing (70) supports the rotating body (A) in the radial direction (X) to reduce contact between the rotating body (A) and the radial magnetic bearing (40). The rear protective bearing (70) reduces contact between the radial magnetic bearing rotor (41) and each of the upper radial magnetic bearing stator (42) and the lower radial magnetic bearing stator (43). The rear protective bearing (70) comes into contact with the rotating body (A) earlier than the radial magnetic bearing (40), when the rotating body (A) moves in the radial direction (R).

### (Magnetic Bearing Control Device)

The magnetic bearing control device (90) is built in the magnetic bearing device (10). The magnetic bearing control device (90) includes a controller (91) as a control unit and a power source (92). A microcomputer and a program, for example, constitute the controller (91). The power source (92) supplies current to the radial magnetic bearing (40) and the thrust magnetic bearing (50) based on a command signal from the controller (91). The power source (92) is power controlled by, for example, pulse width modulation (PWM) method. The controller (91) receives a detection value of the axial position sensor (81) and a detection value of the radial position sensor (82).

The magnetic bearing control device (90) controls the magnetic bearing device (10). The magnetic bearing control device (90) supplies a first current (J1) to the thrust magnetic bearing (50). The magnetic bearing control device (90) applies a first voltage (E1) to the thrust magnetic bearing (50). The first current (J1) and the first voltage (E1) correspond to each other. The thrust magnetic bearing (50) receives the first current (J1) from the magnetic bearing control device (90), thereby making the thrust electromagnetic force (Fx) act on the rotating body (A) in the axial direction (X).

The magnetic bearing control device (90) supplies the first current (J1) to the front thrust magnetic bearing stator (52), thereby making the thrust electromagnetic force (Fx) act forward (Xa) in the axial direction (X) between the front thrust magnetic bearing stator (52) and the thrust magnetic bearing rotor (51) to cause the rotating body (A) to move forward (Xa) in the axial direction (X). The magnetic bearing control device (90) supplies the first current (J1) to the rear thrust magnetic bearing stator (53), thereby making the thrust electromagnetic force (Fx) act rearward (Xb) in the axial direction (X) between the rear thrust magnetic bearing stator (53) and the thrust magnetic bearing rotor (51) to cause the rotating body (A) to move rearward (Xb) in the axial direction (X).

The magnetic bearing control device (90) supplies a second current (J2) to the radial magnetic bearing (40). The magnetic bearing control device (90) applies a second voltage (E2) to the radial magnetic bearing (40). The second current (J2) and the second voltage (E2) correspond to each other. The radial magnetic bearing (40) receives the second current (J2) from the magnetic bearing control device (90), thereby making the radial electromagnetic force (Fr) act on the rotating body (A) in the radial direction (R).

The magnetic bearing control device (90) supplies the second current (J2) to the upper radial magnetic bearing stator (42), thereby making the radial electromagnetic force (Fr) act outward in the radial direction (X) and upward (Va) in the vertical direction (V) between the upper radial magnetic bearing stator (42) and the radial magnetic bearing rotor (41) to cause the rotating body (A) to move outward in the radial direction (X) and upward (Va) in the vertical direction (V). The magnetic bearing control device (90) supplies the second current (J2) to the lower radial magnetic bearing stator (43), thereby making the radial electromagnetic force (Fr) act outward in the radial direction (X) and downward (Vb) in the vertical direction (V) between the lower radial magnetic bearing stator (43) and the radial magnetic bearing rotor (41) to cause the rotating body (A) to move outward in the radial direction (X) and downward (Vb) in the vertical direction (V).

The magnetic bearing control device (90) supplies the first current (J1) to the thrust magnetic bearing (50) and supplies the second current (J2) to the radial magnetic bearing (40). The magnetic bearing control device (90) makes the thrust electromagnetic force (Fx) and the radial electromagnetic force (Fr) act on the rotating body (A) in the axial direction (X) and the radial direction (R). The magnetic bearing control device (90) performs magnetic levitation control on the rotating body (A) in the axial direction (X) and the radial direction (R). Hereinafter, the time of the magnetic levitation control on the rotating body (A) may sometimes be referred to as a magnetic levitation control time (L). At the magnetic levitation control time (L), the rotating body (A) does not come into contact with the front protective bearing (60) and the rear protective bearing (70).

### (Position Adjustment of Rotating Body with respect to Front Protective Bearing)

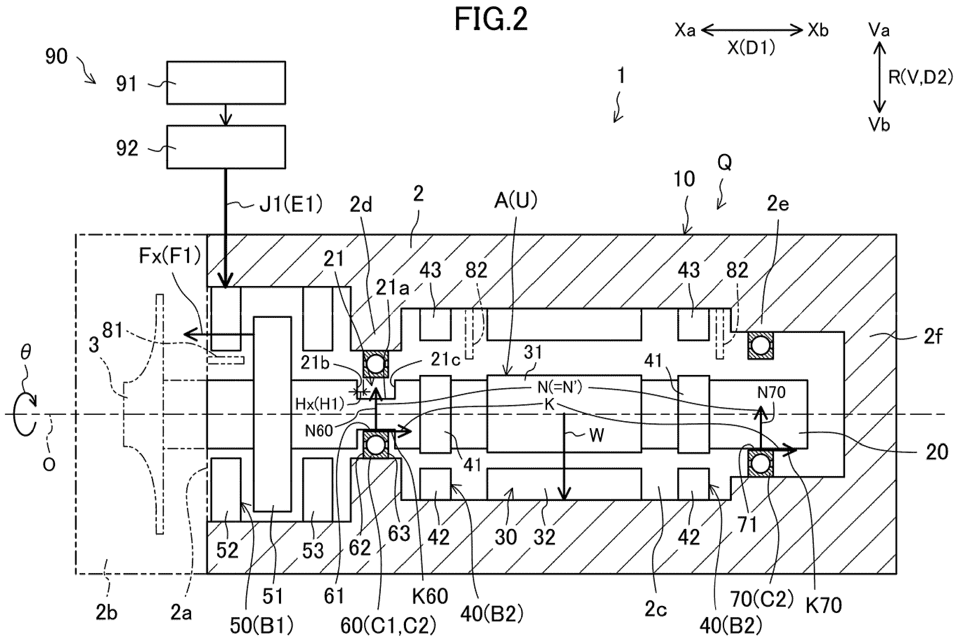

FIG. 2 illustrates position adjustment of the rotating body (A) with respect to the front protective bearing (60) according to this embodiment. In order that the front protective bearing (60) can function effectively, it is necessary to adjust (calibrate) an axial position (Hx) as a first-direction position (H1), which is the position of the rotating body (A) in the axial direction (X) with respect to the front protective bearing (60). In general, before magnetic levitation control is performed on the rotating body (A), the axial position (Hx) of the rotating body (A) in the axial direction (X) with respect to the front protective bearing (60) is adjusted while having the thrust electromagnetic force (Fx) of the thrust magnetic bearing (50) act on the rotating body (A).

Hereinafter, the time of adjustment of the axial position (Hx) of the rotating body (A) with respect to the front protective bearing (60) may be referred to as a position adjustment time (Q). In FIG. 2, the axial position (Hx) is represented by a distance between the front surface (21b) of the recess (21) of the shaft (20) and the front surface (62) of the front protective bearing (60).

At the position adjustment time (Q), the motor (30) is stopped. At the position adjustment time (Q), the axial position (Hx) of the rotating body (A) with respect to the front protective bearing (60) is adjusted. Specifically, at the position adjustment time (Q), the rotating body (A) is positioned at an intermediate position between the position of the rotating body (A) when the rear surface (21c) of the recess (21) of the shaft (20) comes into contact with the rear surface (63) of the front protective bearing (60) and the position of the rotating body (A) when the front surface (21b) of the recess (21) of the shaft (20) comes into contact with the front surface (62) of the front protective bearing (60). At the position adjustment time (Q), the magnetic bearing control device (90) receives the detection value of the axial position sensor (81).

At the position adjustment time (Q), the thrust electromagnetic force (Fx) of the thrust magnetic bearing (50) is made to act on the rotating body (A) in the axial direction (X), thereby causing the rotating body (A) to move. If a great thrust electromagnetic force (Fx) acts on the rotating body (A) at the position adjustment time (Q), the acceleration of the rotating body (A) increases significantly, and the speed (U) of the rotating body (A) increases. As a result, the rotating body (A) comes into contact with the front protective bearing (60) with great momentum, and the front protective bearing (60) and a component (e.g., retaining ring) fixed thereto may be damaged by the contact with the rotating body (A). Specifically, at the position adjustment time (Q), the rear surface (21c) of the recess (21) of the shaft (20) may come into contact with the rear surface (63) of the front protective bearing (60) strongly, or the front surface (21b) of the recess (21) of the shaft (20) may come into contact with the front surface (62) of the front protective bearing (60) strongly.

In this embodiment, a method described later is used to reduce damage of the front protective bearing (60) and components fixed thereto due to contact with the rotating body (A) at the position adjustment time (Q) for adjusting the axial position (Fx) of the rotating body (A) with respect to the front protective bearing (60) in the magnetic bearing device (10).

### (Resultant Force Acting on Rotating Body)

Hereinafter, the total of all the forces acting on the rotating body (A) in a state in which no current (J1, J2) is supplied to the radial magnetic bearing (40) and the thrust magnetic bearing (50) will be referred to as a resultant force (W). The resultant force (W) consists mainly of gravitation and magnetizing force. The gravitation acts on the rotating body (A) outward in the radial direction (R) and downward (Vb) in the vertical direction (V).

The magnetizing force acts mainly between the motor rotor (31) and the motor stator (32), between the radial magnetic bearing rotor (41) and the upper radial magnetic bearing stator (42), between the radial magnetic bearing rotor (41) and the lower radial magnetic bearing stator (43), between the thrust magnetic bearing rotor (51) and the front thrust magnetic bearing stator (52), and between the thrust magnetic bearing rotor (51) and the rear thrust magnetic bearing stator (53).

The magnetizing force is generated by a magnetic flux density remaining in the magnetic materials of the motor rotor (31), the motor stator (32), the magnetic bearing rotors (41, 51), and the magnetic bearing stators (42, 43, 52, 53) even when a magnetic field that was applied to the magnetic materials is reduced to zero. This magnetizing force acts even in a state in which no current (J1, J2) is supplied to the magnetic bearings (40, 50) and the motor (30). The magnetizing force acts on the rotating body (A) in various directions, i.e., the axial direction (X), the radial direction (R), and the circumferential direction (θ).

Of the resultant force (W), the gravitation is dominant over the magnetizing force in many cases. In this example, for the sake of simplicity, the resultant force (W) is assumed to act outward in the radial direction (R) and downward (Vb) in the vertical direction (V).

### (Movement of Rotating Body)

In this embodiment, the magnetic bearing control device (90) supplies the first current (J1) to the thrust magnetic bearing (50), but does not supply the second current (J2) to the radial magnetic bearing (40), at the position adjustment time (Q) as illustrated in FIG. 2.

Since the second current (J2) is not supplied to the radial magnetic bearing (40) at the position adjustment time (Q), the radial electromagnetic force (Fr) does not act on the rotating body (A) in the radial direction (R). At the position adjustment time (Q), the rotating body (A) is caused to move outward in the radial direction (R) and downward (Vb) in the vertical direction (V) by the resultant force (W), and comes into contact with a lower portion of the inner peripheral surface (61) of the front protective bearing (60) and a lower portion of the inner peripheral surface (71) of the rear protective bearing (70).

The rotating body (A) is given a front normal force (N60) from the front protective bearing (60). The rotating body (A) is given a rear normal force (N70) from the rear protective bearing (70). The front normal force (N60) and the rear normal force (N70) act inward in the radial direction (R) and upward (Va) in the vertical direction (V). A total normal force (N), which is the total of the front normal force (N60) and the rear normal force (N70), is equal to the resultant force (W) (N = W).

Similarly, when the first current (J1) is not supplied to the thrust magnetic bearing (50), and the second current (J2) is not supplied to the radial magnetic bearing (40), as well, the rotating body (A) is moved outward in the radial direction (R) and downward (Vb) in the vertical direction (V) by the resultant force (W) and comes into contact with the inner peripheral surface (61) of the front protective bearing (60) and the inner peripheral surface (71) of the rear protective bearing (70). A total normal force (N') at the time when the supply of the first current (J1) and the second current (J2) is stopped is equal to the magnitude of the vector of the resultant force (W) in the vertical direction (V).

In this embodiment, the total normal force (N) is equal to the total normal force (N') of when the current supply is stopped (N = N').

At the position adjustment time (Q), the magnetic bearing control device (90) supplies the first current (J1) to the front thrust magnetic bearing stator (52) of the thrust magnetic bearing (50) first, thereby making the thrust electromagnetic force (Fx) act forward (Xa) in the axial direction (X) on the rotating body (A) to cause the rotating body (A) to move forward (Xa) in the axial direction (X). At this time, the first current (J1) is not supplied to the rear thrust magnetic bearing stator (53) of the thrust magnetic bearing (50).

When the thrust electromagnetic force (Fx) acts forward (Xa) in the axial direction (X) on the rotating body (A), and the rotating body (A) is not yet moved, a front static frictional force (K60) of the front protective bearing (60) and a rear static frictional force (K70) of the rear protective bearing (70) act on the rotating body (A). The front static frictional force (K60) and the rear static frictional force (K70) act on the rotating body (A) in a direction opposite to a direction to which the rotating body (A) is to move. A total static frictional force (K), which is the total of the front static frictional force (K60) and the rear static frictional force (K70), is equal to the thrust electromagnetic force (Fx).

When the thrust electromagnetic force (Fx) acting forward (Xa) in the axial direction (X) on the rotating body (A) exceeds the maximum value (maximum static frictional force) of the total static frictional force (K), the rotating body (A) moves forward (Xa) in the axial direction (X), and the axial position (Hx) of the rotating body (A) with respect to the front protective bearing (60) changes.

Although not described in detail, the same also applies to a case in which the first current (J1) is supplied to the rear thrust magnetic bearing stator (53) of the thrust magnetic bearing (50) to cause the rotating body (A) to move rearward (Xb) in the axial direction (X). In the following description, supplying the first current (J1) to the front thrust magnetic bearing stator (52) of the thrust magnetic bearing (50) may be simply referred to as supplying the first current (J1) to the thrust magnetic bearing (50).

### (Reduction in Damage of Front Protective Bearing)

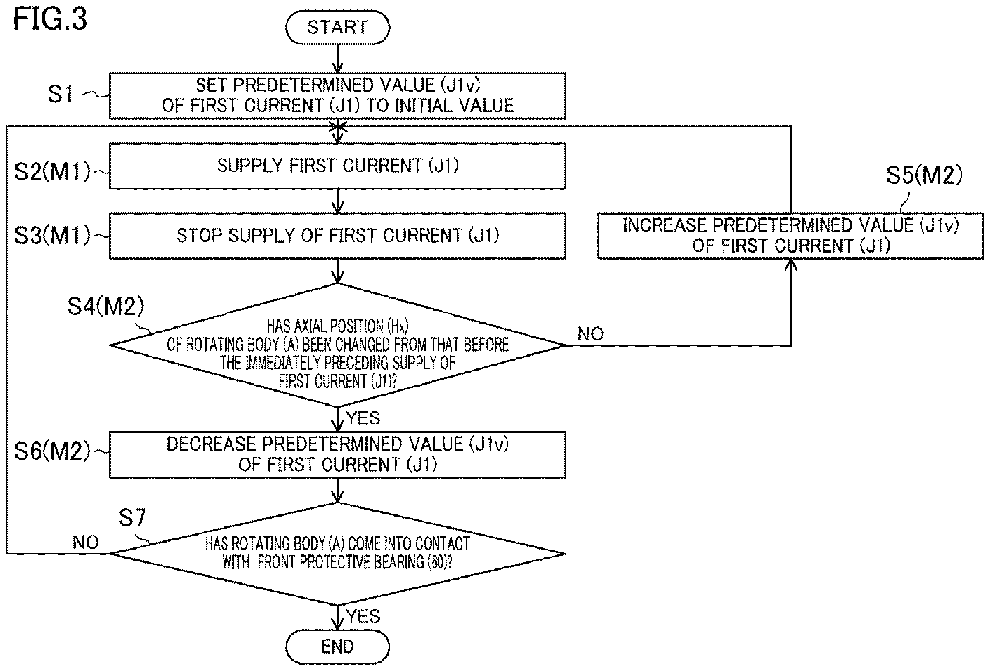

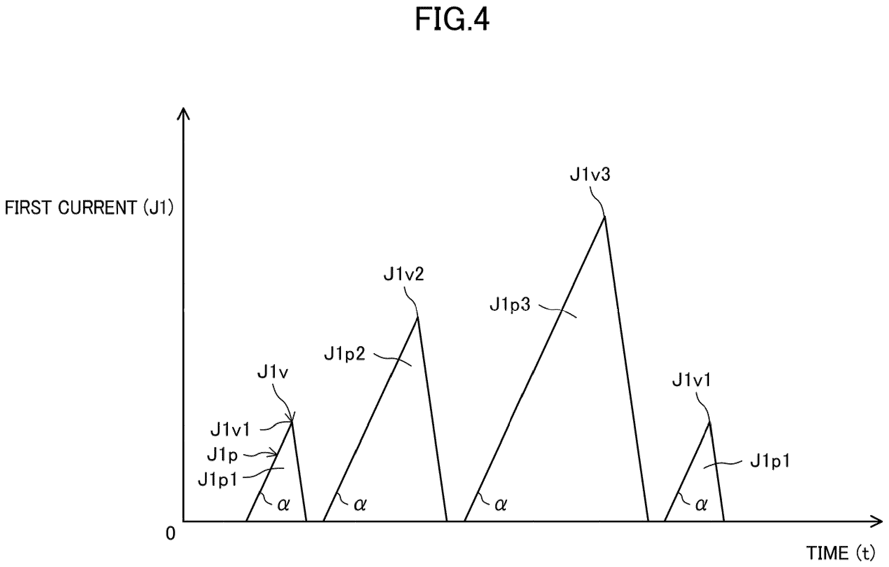

FIG. 3 is a flowchart illustrating a method for reducing damage of the front protective bearing (60) and the component fixed thereto according to this embodiment. FIG. 4 is a graph illustrating the method for reducing damage of the front protective bearing (60) and the component fixed thereto according to this embodiment. In FIG. 4, the horizontal axis represents a time (t) in units of, for example, [s], and the vertical axis represents the value of the first current (J1) in units of, for example, [A].

As illustrated in FIG. 4, in this embodiment, the first current (J1) supplied to the thrust magnetic bearing (50) is in a ramp form. In the first current (J1), a plurality of ramp waves (J1p) is continuously formed. The current increase rate (α) of each ramp wave (J1p) per time is constant. In this example, the ramp wave (J1p) is a triangular wave. Each ramp wave (J1p) rises and falls. The first current (J1) has a predetermined value (J1v) for each ramp wave (J1p).

As illustrated in FIG. 3, the magnetic bearing control device (90) repeatedly executes a first operation (M1) and a second operation (M2). In the first operation (M1), the first current (J1) of a predetermined value (J1v) is supplied to the thrust magnetic bearing (50), and then, the supply of the first current (J1) to the thrust magnetic bearing (50) is immediately stopped without referring to (checking) the axial position (Hx) of the rotating body (A).

In the second operation (M2), the predetermined value (J1v) is increased when the axial position (Hx) of the rotating body (A) does not change from that before the first current (J1) is supplied to the thrust magnetic bearing (50). In the second operation (M2), the predetermined value (Jv1) is decreased when the axial position (Hx) of the rotating body (A) changes from that before the first current (J1) is supplied to the thrust magnetic bearing (50).

As illustrated in FIG. 3, the process starts from "START," and the predetermined value (J1v) of the first current (J1) is set to an initial value in the first step (S1). Specifically, in the first step (S1), the predetermined value (J1v) of the first current (J1) is set to a first predetermined value (J1v1). As illustrated in FIG. 4, the first predetermined value (J1v1) corresponds to the maximum value of a first ramp wave (J1p1). The first predetermined value (J1v1) is the smallest among predetermined values (J1v) greater than zero. Hereinafter, the predetermined value (J1v) corresponds to the maximum value of the ramp wave (J1p) of the same number. The predetermined value (J1v) is greater as the number increases.

The first operation (M1) is performed in the second step (S2) and the third step (S3). In the second step (S2), as part of the first operation (M1), the first current (J1) is supplied to the thrust magnetic bearing (50) with the ramp wave (J1p). Specifically, in the second step (S2), as part of the first operation (M1), the first current (J1) of the first predetermined value (J1v1) is supplied to the thrust magnetic bearing (50) with the first ramp wave (J1p1).

In the third step (S3), as part of the first operation (M1), the supply of the first current (J1) (first ramp wave (J1p1)) to the thrust magnetic bearing (50) is immediately stopped without referring to the axial position (Hx) of the rotating body (A).

In the fourth step (S4) to the sixth step (S6), the second operation (M2) is performed. In the fourth step (S4), as part of the second operation (M2), it is determined whether the axial position (Hx) of the rotating body (A) has changed from that before the immediately preceding supply of the first current (J1) (first ramp wave (J1p1)). The change in the axial position (Hx) of the rotating body (A) is detected based on the detection value of the axial position sensor (81).

If it is determined in the fourth step (S4) that the axial position (Hx) of the rotating body (A) has not been changed, the process proceeds to the fifth step (S5). In the fifth step (S5), as part of the second operation (M2), the predetermined value (J1v) of the first current (J1) is increased. Specifically, in the fifth step (S5), the predetermined value (J1v) of the first current (J1) is increased from the first predetermined value (J1v1) to a second predetermined value (J1v2). The second predetermined value (J1v2) corresponds to the maximum value of a second ramp wave (J1p2). After the predetermined value (J1v) of the first current (J1) is increased in the fifth step (S5), the process returns to the second step (S2).

The second step (S2) to the fifth step (S5) are repeated thereafter until the axial position (Hx) of the rotating body (A) changes from that before the immediately preceding supply of the first current (J1).

It is assumed that the predetermined value (J1v) of the first current (J1) is increased to a third predetermined value (J1v3) by repetition of the second step (S2) to the fifth step (S5) (see FIG. 4). The third predetermined value (J1v3) corresponds to the maximum value of a third ramp wave (J1p3).

In the second step (S2), as part of the first operation (M1), the first current (J1) of the third predetermined value (J1v3) is supplied to the thrust magnetic bearing (50) with the third ramp wave (J1p3). In the third step (S3), as part of the first operation (M1), the supply of the first current (J1) (third ramp wave (J1p3)) to the thrust magnetic bearing (50) is immediately stopped without referring to the axial position (Hx) of the rotating body (A).

In the fourth step (S4), as part of the second operation (M2), it is determined whether the axial position (Hx) of the rotating body (A) has changed from that before the immediately preceding supply of the first current (J1) (third ramp wave (J1p3)).

If it is determined in the fourth step (S4) that the axial position (Hx) of the rotating body (A) has been changed, the process proceeds to the sixth step (S6). In the sixth step (S6), as part of the second operation (M2), the predetermined value (J1v) of the first current (J1) is decreased. Specifically, in the sixth step (S6), the predetermined value (J1v) of the first current (J1) is decreased from the third predetermined value (J1v3) to the first predetermined value (J1v1) as the initial value. The first predetermined value (J1v1) corresponds to the maximum value of the first ramp wave (J1p1). When the predetermined value (J1v) of the first current (J1) is decreased in the sixth step (S6), the process proceeds to the seventh step (S7).

In the seventh step (S7), it is determined whether the rotating body (A) has come into contact with the front protective bearing (60). For example, it is determined in the seventh step (S7) whether the rear surface (21c) of the recess (21) of the shaft (20) has come into contact with the rear surface (63) of the front protective bearing (60). For example, the contact between the rotating body (A) and the front protective bearing (60) is detected based on the detection value of the axial position sensor (81).

If it is determined in the seventh step (S7) that the rotating body (A) has not come into contact with the front protective bearing (60), the process returns to the second step (S2). If it is determined in the seventh step (S7) that the rotating body (A) has come into contact with the front protective bearing (60), the process comes to END.

The magnetic bearing control device (90) repeatedly executes the first operation (M1) (second step (S2) and third step (S3)) and the second operation (M2) (fourth step (S4) to sixth step (S6)). At the position adjustment time (Q), the magnetic bearing control device (90) controls the supply of the first current (J1) to the thrust magnetic bearing (50) so as to reduce the speed (U) of the rotating body (A) at the time of contact between the rotating body (A) and the front protective bearing (60).

### (Effects and Advantages)

According to this embodiment, the magnetic bearing control device (90) reduces the speed (U) of the rotating body (A) at the time of contact between the rotating body (A) and the front protective bearing (60) at the position adjustment time (Q) at which the axial position (Hx) of the rotating body (A) with respect to the front protective bearing (60) is adjusted. In the magnetic bearing device (10), it is possible to reduce damage of the front protective bearing (60) and the component fixed thereto at the position adjustment time (Q) at which the axial position (Hx) of the rotating body (A) with respect to the front protective bearing (60) is adjusted.

The first operation (M1) and the second operation (M2) are repeatedly performed, so that the axial position (Hx) of the rotating body (A) with respect to the front protective bearing (60) changes in small steps. This is more advantageous in reducing the speed (U) of the rotating body (A) at the time of contact between the rotating body (A) and the front protective bearing (60).

In particular, according to this embodiment, reference is not made to the axial position (Hx) of the rotating body (A) in the first operation (M1); it is thus possible to change the axial position (Hx) of the rotating body (A) in smaller steps.

### <Second Embodiment>

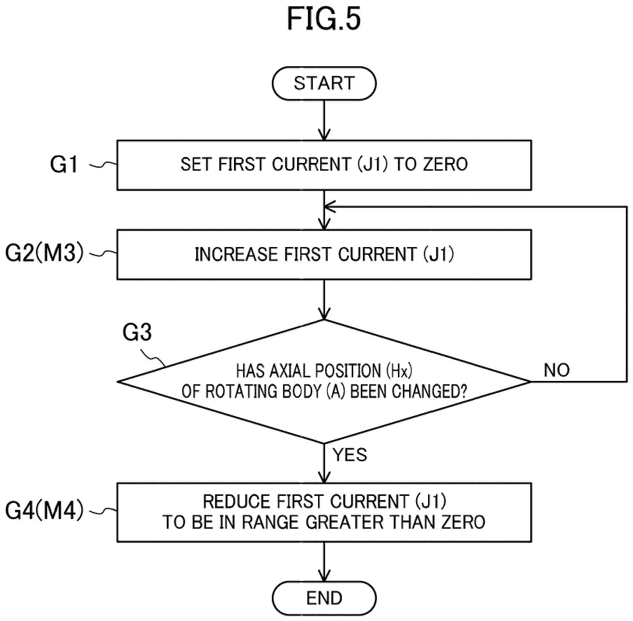

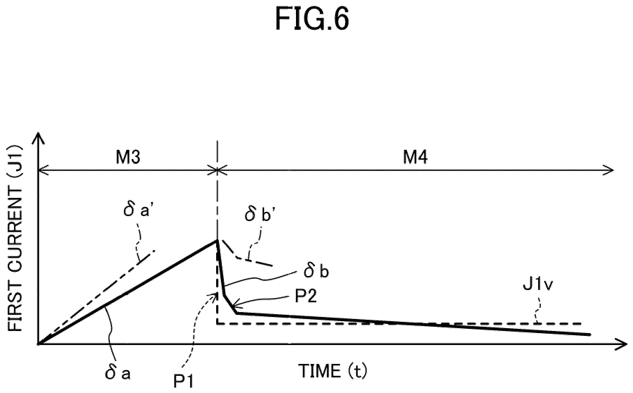

FIG. 5 is a flowchart illustrating a method for reducing damage of a front protective bearing (60) and a component fixed thereto according to a second embodiment, which is equivalent to FIG. 3. FIG. 6 is a graph illustrating the method for reducing damage of the front protective bearing (60) and the component fixed thereto according to the second embodiment, which is equivalent to FIG. 4. In FIG. 6, a broken line represents a first pattern (P1), and a solid line represents a second pattern (P2). In the following description of the second embodiment, components similar to those of the above-described embodiment are denoted by the same reference numerals, and detailed description thereof may be omitted.

As illustrated in FIGS. 5 and 6, the magnetic bearing control device (90) executes a third operation (M3) and a fourth operation (M4). In the third operation (M3), the first current (J1) for the thrust magnetic bearing (50) is increased until a change in the axial position (Hx) of the rotating body (A) with respect to the front protective bearing (60) is detected. In the fourth operation (M4), after the detection of the change in the axial position (Hx) of the rotating body (A) with respect to the front protective bearing (60), the first current (J1) for the thrust magnetic bearing (50) is reduced to be in a range greater than zero.

As illustrated in FIG. 6, the third operation (M3) and the fourth operation (M4) includes two types, i.e., the first pattern (P1) and the second pattern (P2).

Specifically, as illustrated in FIG. 5, the process starts from "START," and the first current (J1) is set to zero in the first step (G1).

In a second step (G2), the third operation (M3) is performed. In the second step (G2), the first current (J1) is increased as the third operation (M3). The first current (J1) increases, for example, in a ramp shape.

In the third step (G3), a change in the axial position (Hx) of the rotating body (A) is detected. In the third step (G3), it is determined whether the axial position (Hx) of the rotating body (A) has changed.

If it is determined in the third step (G3) that the axial position (Hx) of the rotating body (A) has not been changed, the process returns to the second step (G2). If it is determined in the third step (G3) that the axial position (Hx) of the rotating body (A) has been changed, the process proceeds to the fourth step (G4).

In the fourth step (G4), the fourth operation (M4) is performed. In the fourth step (G4), as the fourth operation (M4), the first current (J1) is reduced to be in the range greater than zero. Then, the process comes to END.

As indicated by the broken line in FIG. 6, in the first pattern (P1), the fourth operation (M4) reduces the first current (J1) for the thrust magnetic bearing (50) to a predetermined value (J1v) greater than zero. The predetermined value (J1v) is a constant value greater than zero.

As indicated by the solid line in FIG. 6, in the second pattern (P2), the fourth operation (M4) reduces the first current (J1) for the thrust magnetic bearing (50) such that the speed (U) of movement of the rotating body (A) in the axial direction (X) be constant (such that the rate of change in the axial position (Hx) be constant).

As illustrated in FIG. 6, in the first pattern (P1) and the second pattern (P2), the magnetic bearing control device (90) supplies the first current (J1) to the thrust magnetic bearing (50) at a current change rate (δa) smaller than the maximum current change rate (δ'a) (see a dot-dot-dash line) of at the magnetic levitation control (L) on the rotating body (A) (magnetic levitation control time (L)), at the position adjustment time (Q) in the third operation (M3).

As illustrated in FIG. 6, in the first pattern (P1) and the second pattern (P2), the magnetic bearing control device (90) reverses the polarity of the first voltage (E1) to be applied to the thrust magnetic bearing (50) and thereafter stops the supply of the first current (J1) to the thrust magnetic bearing (50) in the fourth operation (M4). Reversing the polarity of the first voltage (E1) to be applied to the thrust magnetic bearing (50) reduces the first current (J1) for the thrust magnetic bearing (50) at a current change rate (δb) greater (in absolute value) than a current change rate (δ'b) (see a dot-dot-dash line) of a case in which the polarity of the first voltage (E1) is not reversed.

The other configurations are similar to those of the first embodiment.

According to this embodiment, the first current (J1) for the thrust magnetic bearing (50) is reduced to be in the range greater than zero; therefore, the speed (U) of the rotating body (A) at the time of contact between the rotating body (A) and the front protective bearing (60) can be reduced without stopping the movement of the rotating body (A).

The speed (U) of the rotating body (A) at the time of contact can be easily reduced by setting the first current (J1) to the predetermined value (J1v).

The first current (J1) for the thrust magnetic bearing (50) is reduced such that the speed (U) of the movement of the rotating body (A) in the axial direction (X) is constant. It is thus possible to reduce the speed (U) of the rotating body (A) at the time of contact between the rotating body (A) and the front protective bearing (60) without stopping the movement of the rotating body (A) in the axial direction (X).

Reducing the current change rate (δa) at the time of current increase at the position adjustment time (Q) reduces a rapid increase in the first current (J1) for the thrust magnetic bearing (50). It is thus possible to reduce a rapid movement of the rotating body (A) in the axial direction (X).

Reversing the polarity of the first voltage (E1) to be applied to the thrust magnetic bearing (50) reduces the first current (J1) for the thrust magnetic bearing (50) at a current change rate (δb) greater (in absolute value) than a current change rate (δ'b) of a case in which the polarity of the first voltage (E1) is not reversed. This is advantageous in reducing the speed (U) of the movement of the rotating body (A) in the axial direction (X).

### <Third Embodiment>

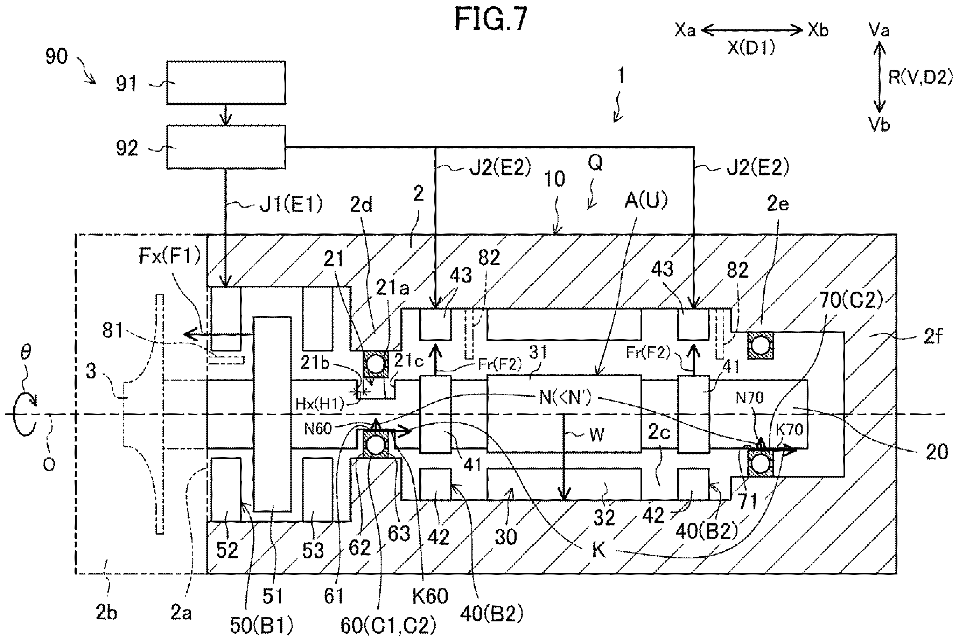

FIG. 7 illustrates position adjustment of a rotating body (A) with respect to a front protective bearing (60) according to a third embodiment, which is equivalent to FIG. 2. In the following description of the third embodiment, components similar to those of the above-described embodiments are denoted by the same reference numerals, and detailed description thereof may be omitted.

In this embodiment, as illustrated in FIG. 7, at the position adjustment time (Q), the magnetic bearing control device (90) supplies the first current (J1) to the thrust magnetic bearing (50), and also supplies the second current (J2) to the radial magnetic bearing (40). In particular, the magnetic bearing control device (90) supplies the second current (J2) to the upper radial magnetic bearing stator (42) of the radial magnetic bearing (40), but does not supply the second current (J2) to the lower radial magnetic bearing stator (43) of the radial magnetic bearing (40).

The magnetic bearing control device (90) receives the detection value of the axial position sensor (81) and the detection value of the radial position sensor (82).

Since the second current (J2) is supplied to the upper radial magnetic bearing stator (42) of the radial magnetic bearing (40), the radial electromagnetic force (Fr) acts on the rotating body (A) outward in the radial direction (R) and upward (Va) in the vertical direction (V). Meanwhile, the resultant force (W) acts outward in the radial direction (R) and downward (Vb) in the vertical direction (V) on the rotating body (A).

The magnetic bearing control device (90) supplies the second current (J2) to the radial magnetic bearing (40) such that the radial electromagnetic force (Fr) of the radial magnetic bearing (40) acting outward in the radial direction (R) and upward (Va) in the vertical direction (V) on the rotating body (A) is smaller than the resultant force (W) acting outward in the radial direction (R) and downward (Vb) in the vertical direction (V) on the rotating body (A).

Since the resultant force (W) acting downward (Vb) is greater than the radial electromagnetic force (Fr) acting upward (Va), the rotating body (A) comes into contact with the lower portion of the inner peripheral surface (61) of the front protective bearing (60) and the lower portion of the inner peripheral surface (71) of the rear protective bearing (70).

The rotating body (A) is given a front normal force (N60) from the front protective bearing (60). The rotating body (A) is given a rear normal force (N70) from the rear protective bearing (70). The front normal force (N60) and the rear normal force (N70) act inward in the radial direction (R) and upward (Va) in the vertical direction (V).

At the position adjustment time (Q), the total normal force (N) which is the total of the front normal force (N60) and the rear normal force (N70) is equal to a value obtained by subtracting the radial electromagnetic force (Fr) from the resultant force (W) (N = W - Fr).

In this embodiment, the total normal force (N) is smaller than the total normal force (N') of when the supply of the first current (J1) and the second current (J2) is stopped (N < N').

A front static frictional force (K60) of the front protective bearing (60) and a rear static frictional force (K70) of the rear protective bearing (70) act on the rotating body (A). The front static frictional force (K60) and the rear static frictional force (K70) act on the rotating body (A) in a direction opposite to a direction to which the rotating body (A) is to move. A total static frictional force (K), which is the total of the front static frictional force (K60) and the rear static frictional force (K70), is equal to the thrust electromagnetic force (Fx).

The magnetic bearing control device (90) supplies the second current (J2) to the radial magnetic bearing (40) such that the total normal force (N) of the front protective bearing (60) and the rear protective bearing (70) acting on the rotating body (A) is in a range smaller than the total normal force (N') of when the supply of the first current (J1) and the second current (J2) is stopped, and greater than zero. The rotating body (A) does not levitate magnetically.

The other configurations are similar to those of the first embodiment and the second embodiment.

According to this embodiment, the rotating body (A) comes into contact with the inner peripheral surface (61) of the front protective bearing (60) and the inner peripheral surface (71) of the rear protective bearing (70). Since the total normal force (N) of the front protective bearing (60) and the rear protective bearing (70) acting on the rotating body (A) is smaller than that of when the supply of the first current (J1) and the second current (J2) is stopped, it is possible to reduce the maximum static frictional force acting on the rotating body (A) when the first current (J1) is supplied to start movement of the rotating body (A).

As a result, it is possible to reduce the thrust electromagnetic force (Fx) acting on the rotating body (A) and reduce a rapid movement of the rotating body (A) in the axial direction (X), which is advantageous in reducing the speed (U) of the rotating body (A) at the time of contact between the rotating body (A) and the front protective bearing (60).

### <Fourth Embodiment>

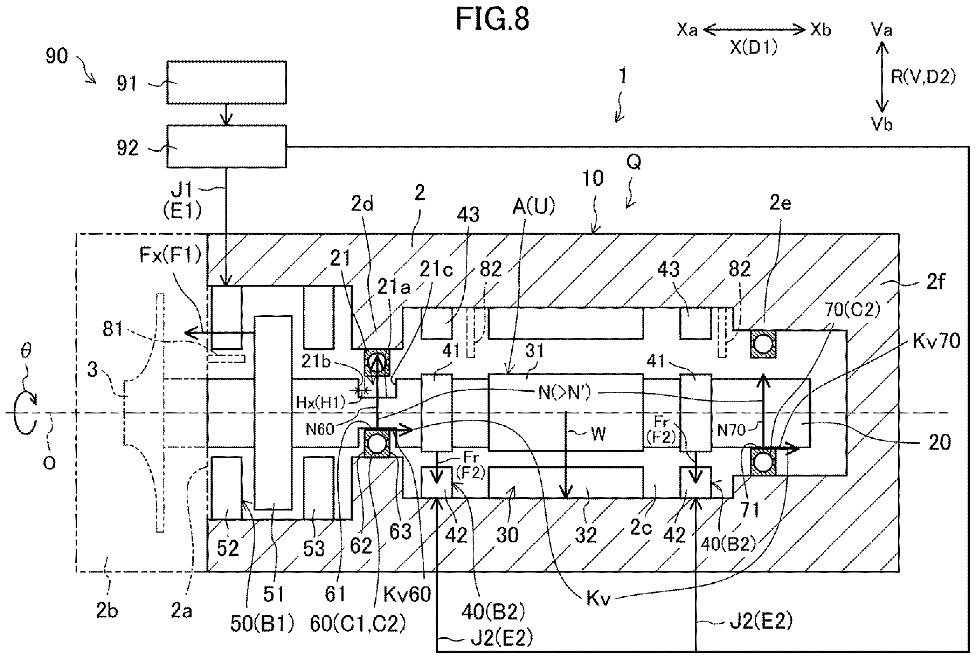

FIG. 8 illustrates position adjustment of a rotating body (A) with respect to a front protective bearing (60) according to a fourth embodiment, which is equivalent to FIG. 2. In the following description of the fourth embodiment, components similar to those of the above-described embodiments are denoted by the same reference numerals, and detailed description thereof may be omitted.

In this embodiment, as illustrated in FIG. 8, at the position adjustment time (Q), after the axial position (Hx) of the rotating body (A) has been changed, the magnetic bearing control device (90) stops the supply of the second current (J2) to the upper radial magnetic bearing stator (42) of the radial magnetic bearing (40), and supplies the second current (J2) to the lower radial magnetic bearing stator (43) of the radial magnetic bearing (40).

The radial electromagnetic force (Fr) and the resultant force (W) act outward in the radial direction (R) and downward (Vb) in the vertical direction (V) on the rotating body (A). The rotating body (A) comes into contact with a lower portion of the inner peripheral surface (61) of the front protective bearing (60) and a lower portion of the inner peripheral surface (71) of the rear protective bearing (70).

The rotating body (A) is given a front normal force (N60) from the front protective bearing (60). The rotating body (A) is given a rear normal force (N70) from the rear protective bearing (70). The front normal force (N60) and the rear normal force (N70) act inward in the radial direction (R) and upward (Va) in the vertical direction (V).

At the position adjustment time (Q), the total normal force (N) which is the total of the front normal force (N60) and the rear normal force (N70) is equal to the total of the resultant force (W) and the radial electromagnetic force (Fr) (N = W + Fr).

In this embodiment, the total normal force (N) is greater than the total normal force (N') of when the supply of the first current (J1) and the second current (J2) is stopped (N > N').

A front dynamic frictional force (Kv60) of the front protective bearing (60) and rear dynamic frictional force (Kv70) of the rear protective bearing (kv70) act on the rotating body (A). The front dynamic frictional force (Kv60) and the rear dynamic frictional force (Kv70) act on the rotating body (A) in a direction opposite to a direction to which the rotating body (A) is to move. A total dynamic frictional force (Kv) which is the total of the front dynamic frictional force (Kv60) and the rear dynamic frictional force (Kv70) is equal to the thrust electromagnetic force (Fx).

The magnetic bearing control device (90) supplies, after the axial position (Hx) of the rotating body (A) has been changed, the second current (J2) to the radial magnetic bearing (40) such that the total normal force (N) of the front protective bearing (60) and the rear protective bearing (70) acting on the rotating body (A) is greater than the total normal force (N') of when the supply of the first current (J1) and the second current (J2) is stopped.

The other configurations are similar to those of the third embodiment.

According to this embodiment, the total normal force (N) of the front protective bearing (60) and the rear protective bearing (70) acting on the rotating body (A) is increased after the axial position (Hx) of the rotating body (A) has been changed, thereby making it possible to increase the total dynamic frictional force (Kv) acting on the rotating body (A). A rapid movement of the rotating body (A) in the axial direction (X) is reduced, which is advantageous in reducing the speed (U) of the rotating body (A) at the time of contact between the rotating body (A) and the front protective bearing (60).

### <Fifth Embodiment>

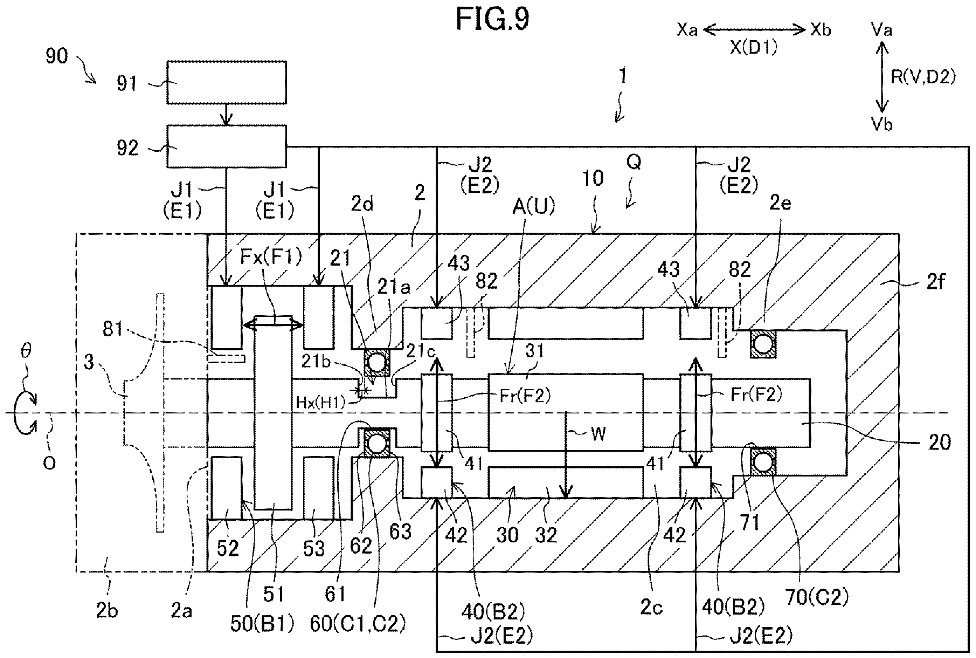

FIG. 9 illustrates position adjustment of a rotating body (A) with respect to a front protective bearing (60) according to a fifth embodiment, which is equivalent to FIG. 2. In the following description of the fifth embodiment, components similar to those of the above-described embodiments are denoted by the same reference numerals, and detailed description thereof may be omitted.

In this embodiment, as illustrated in FIG. 9, at the position adjustment time (Q), the magnetic bearing control device (90) supplies the first current (J1) to the thrust magnetic bearing (50), and also supplies the second current (J2) to the radial magnetic bearing (40).

In particular, the magnetic bearing control device (90) may supply the second current (J2) to the upper radial magnetic bearing stator (42) of the radial magnetic bearing (40), and may supply the second current (J2) to the lower radial magnetic bearing stator (43) of the radial magnetic bearing (40). Moreover, the magnetic bearing control device (90) may supply the first current (J1) not only to the front thrust magnetic bearing stator (52) of the thrust magnetic bearing (50), but also to the rear thrust magnetic bearing stator (53) of the thrust magnetic bearing (50).

The magnetic bearing control device (90) supplies the first current (J1) to the thrust magnetic bearing (50) or supplies the second current (J2) to the radial magnetic bearing (40) so as to vibrate the rotating body (A) in the circumferential direction (θ).

The other configurations are similar to those of the third embodiment and the fourth embodiment.

According to this embodiment, the friction generated on the rotating body (A) changes from static friction to dynamic friction. It is therefore possible to reduce the frictional force acting on the rotating body (A) when the first current (J1) is supplied to the thrust magnetic bearing (50) to start movement of the rotating body (A). As a result, it is possible to reduce the thrust electromagnetic force (Fx) acting on the rotating body (A). A rapid movement of the rotating body (A) in the axial direction (X) is reduced, which is advantageous in reducing the speed (U) of the rotating body (A) at the time of contact between the rotating body (A) and the front protective bearing (60).

### <Sixth Embodiment>

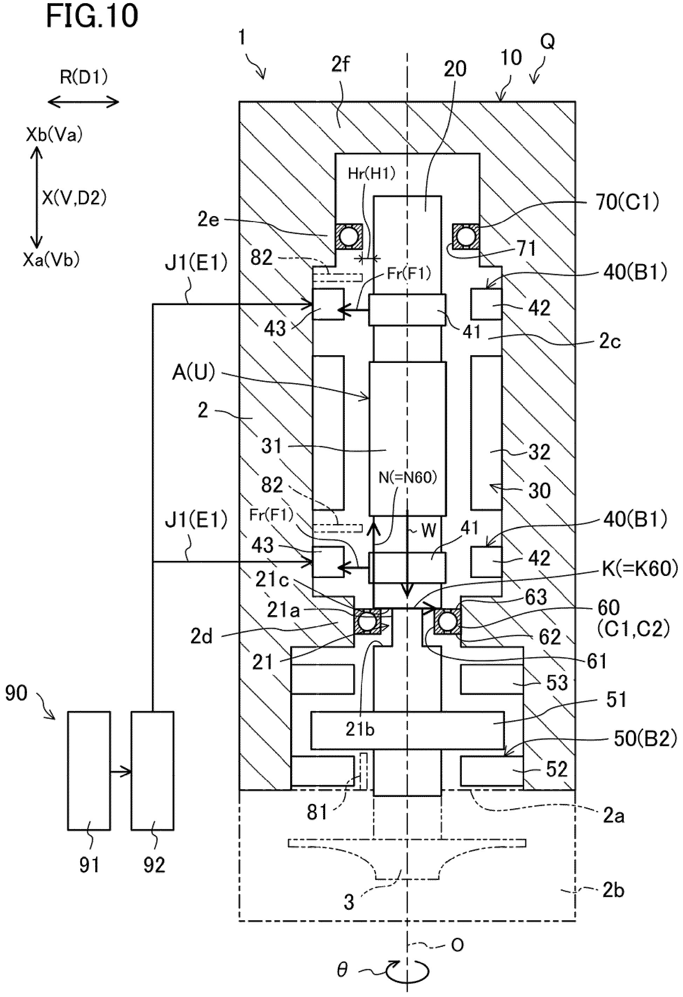

FIG. 10 illustrates position adjustment of a rotating body (A) with respect to a rear protective bearing (70) according to a sixth embodiment, which is equivalent to FIG. 2. In the following description of the sixth embodiment, components similar to those of the above-described embodiments are denoted by the same reference numerals, and detailed description thereof may be omitted.

The magnetic bearing device (10) includes a radial magnetic bearing (40) as a first magnetic bearing (B1), a thrust magnetic bearing (50) as a second magnetic bearing (B2), a front protective bearing (60) as a first protective bearing (C1) and a second protective bearing (C2), and a rear protective bearing (70) as the first protective bearing (C1).

The axis (O) of the shaft (20) extends in the vertical direction (V). The direction in which the axis (O) of the shaft (20) extends will be referred to as the axial direction (X) as the second direction (D2). The direction perpendicular to the axial direction (X) of the shaft (20) will be referred to as the radial direction (R) as the first direction (D1). Forward (Xa) in the axial direction (X) corresponds to downward (Vb) in the vertical direction (V). Rearward (Xb) in the axial direction (X) corresponds to upward (Va) in the vertical direction (V).

The magnetic bearing control device (90) supplies the second current (J2) to the thrust magnetic bearing (50). The magnetic bearing control device (90) applies the second voltage (E2) to the thrust magnetic bearing (50). The thrust magnetic bearing (50) receives the second current (J2) from the magnetic bearing control device (90), thereby making the thrust electromagnetic force (Fx) as the second electromagnetic force (F2) act on the rotating body (A) in the axial direction (X).

The magnetic bearing control device (90) supplies the first current (J1) to the radial magnetic bearing (40). The magnetic bearing control device (90) applies the first voltage (E1) to the radial magnetic bearing (40). The radial magnetic bearing (40) receives the first current (J1) from the magnetic bearing control device (90), thereby making the radial electromagnetic force (Fr) as the first electromagnetic force (F1) act on the rotating body (A) in the radial direction (R).

The position of the rotating body (A) in the radial direction (R) with respect to the rear protective bearing (70) will be referred to as a radial position (Hr) as the first-direction position (H1). The time of adjustment of the radial position (Hr) of the rotating body (A) with respect to the rear protective bearing (70) will be referred to as the position adjustment time (Q). In FIG. 10, the radial position (Hr) is represented by a distance between the outer peripheral surface (20a) of the shaft (20) and the inner peripheral surface (71) of the rear protective bearing (70).

The resultant force (W) consists mainly of the gravitation and the magnetizing force acts forward (Xa) in the axial direction (X) and downward (Vb) in the vertical direction (V). At the position adjustment time (Q), the rotating body (A) is caused to move forward (Xa) in the axial direction (X) and downward (Vb) in the vertical direction (V) by the resultant force (W). At the position adjustment time (Q), the rear surface (21c) of the recess (21) of the shaft (20) of the rotating body (A) comes into contact with the rear surface (63) of the front protective bearing (60).

The rotating body (A) is given a front normal force (N60) from the front protective bearing (60). The front normal force (N60) acts rearward (Xb) in the axial direction (X) and upward (Va) in the vertical direction (V). The front normal force (N60) is equal to the total normal force (N). The total normal force (N) is equal to the resultant force (W).

At the position adjustment time (Q), the magnetic bearing control device (90) supplies the first current (J1) to the radial magnetic bearing (40), thereby making the radial electromagnetic force (Fr) act on the rotating body (A) in the radial direction (R) to cause the rotating body (A) to move in the radial direction (R).

When the radial electromagnetic force (Fr) acts in the radial direction (R) on the rotating body (A), and the rotating body (A) is not yet moved, the front static frictional force (K60) of the front protective bearing (60) acts on the rotating body (A). The front static frictional force (K60) is equal to the total static frictional force (K). The total static frictional force (K) is equal to the radial electromagnetic force (Fr).

When the radial electromagnetic force (Fr) acting on the rotating body (A) in the radial direction (R) exceeds the maximum value (maximum static frictional force) of the total static frictional force (K), the rotating body (A) moves in the radial direction (R), and the radial position (Hr) of the rotating body (A) with respect to the rear protective bearing (70) changes.

At the position adjustment time (Q), the magnetic bearing control device (90) controls the supply of the first current (J1) to the radial magnetic bearing (40) so as to reduce the speed (U) of the rotating body (A) at the time of contact with the contact between the rotating body (A) and the rear protective bearing (70).

### (Other Embodiments)

In the first embodiment, the ramp wave (J1p) may be, for example, a sawtooth wave instead of the triangular wave. In the first embodiment, the first current (J1) may not be of the ramp wave (J1p) but be of a sine wave, for example.

In the first embodiment, in the second operation (M2), it is not necessary to decrease the predetermined value (J1v) of the first current (J1) to the initial value (first predetermined value (J1v1)) and a decrement by only one level from the immediately preceding predetermined value (J1v) may be enough.

A support mechanism of a bearing-less motor (motor having a function of supporting the shaft (20) in a noncontact manner) may be used as the radial magnetic bearing (40).

The thrust magnetic bearing rotor (51) may be divided into a front thrust magnetic bearing rotor and a rear thrust magnetic bearing rotor. In this case, the front thrust magnetic bearing stator (52) and the front thrust magnetic bearing rotor are disposed closer to the impeller (3) (front side (Xa)) in the axial direction (X) with respect to the motor (30), and the rear thrust magnetic bearing stator (53) and the rear thrust magnetic bearing rotor are disposed on the opposite side (rear side (Xb)) to the impeller (3) in the axial direction (X) with respect to the motor (30).

In the case of a sensor-less system (system configured to detect the position of the shaft (20) without using the position sensors (81, 82)), the position sensors (81, 82) may be omitted.

The axis (O) of the shaft (20) in the magnetic bearing device (10) (turbo compressor (1)) may extend in the horizontal direction as in the first to fifth embodiments, or may extend in the vertical direction (V) as in the sixth embodiment. The axis (O) of the shaft (20) may be inclined at an angle of less than 90 degrees with respect to the horizontal direction (or the vertical direction (V)).

In the above-described embodiments, the components of the magnetic bearing device (10) (turbo compressor (1)) are arranged such that the impeller (3) is disposed at the front side (Xa) end portion of the shaft (20) in the axial direction X, and that the thrust magnetic bearing (50), the front protective bearing (60), the radial magnetic bearing (40), the radial position sensor (82), the motor (30), the radial magnetic bearing (40), the radial position sensor (82), the rear protective bearing (70), and the axial position sensor (81) are disposed in this order from the impeller (3) toward the rear side (Xb) in the axial direction (X). However, the arrangement is not limited thereto. For example, the thrust magnetic bearing (50) may be disposed at the opposite (rear side (Xb)) end portion to the impeller (3) (front side (Xa)) in the axial direction (X). Similarly, the other components may be arranged at any positions as well.

The number of impellers (3) is not limited to one, and may be two or more. The attachment position of the impeller (3) is not limited to the front end portion of the shaft (20), and may be other portions, such as a rear end portion of the shaft (20) and a portion other than the end portions of the shaft (20). For example, two impellers (3) may be attached to the front end portion of the shaft (20) next to each other, or two impellers (3) may be attached to the front end portion and the rear end portion of the shaft (20) one by one.

The number of motors (30) may be two or more for the shaft (20).

It is not necessary that one protective bearing (C1, C2) has the functions of both the first protective bearing (C1) and the second protective bearing (C2). In this case, it is preferable to provide one protective bearing (C1, C2) for reducing contact with the thrust magnetic bearing (50) and two protective bearings (C1, C2) for reducing contact with the radial magnetic bearings (40).

The magnetic bearing control device (90) may be separated from the magnetic bearing device (10). The turbo machine (1) is not limited to the turbo compressor, and may be, for example, a pump. The magnetic bearing device (10) may be applied to a rotary machine (e.g., speed reducer) other than the turbo machine (1).

The invention is defined by the appended claims. The elements according to the embodiments, the variations thereof, and the other embodiments may be combined and replaced with each other.

### DESCRIPTION OF REFERENCE CHARACTERS

- A: Rotating Body
- B1: First Magnetic Bearing
- B2: Second Magnetic Bearing
- C1: First Protective Bearing
- C2: Second Protective Bearing
- D1: First Direction
- D2: Second Direction
- X: Axial Direction
- R: Radial Direction
- θ: Circumferential Direction
- V: Vertical Direction
- F1: First Electromagnetic Force
- F2: Second Electromagnetic Force
- Fx: Thrust Electromagnetic Force
- Fr: Radial Electromagnetic Force
- J1: First Current
- J2: Second Current
- E1: First Voltage
- E2: Second Voltage
- H1: First-Direction Position
- Hx: Axial Position
- Hr: Radial Position
- U: Speed
- W: Resultant Force
- N: Total Normal Force (Normal Force)
- K: Total Static Frictional Force
- Kv: Total Dynamic Frictional Force
- L: Magnetic Levitation Control Time
- Q: Position Adjustment Time
- J1v: Predetermined Value
- J1p: Ramp Wave
- δa: Current Change Rate
- δ'a: Maximum Current Change Rate
- δb: Current Change Rate
- M1: First Operation
- M2: Second Operation
- M3: Third Operation
- M4: Fourth Operation
- 1: Turbo Compressor (Turbo Machine)
- 2: Housing
- 3: Impeller
- 10: Magnetic Bearing Device
- 20: Shaft
- 30: Motor
- 40: Radial Magnetic Bearing
- 41: Radial Magnetic Bearing Rotor
- 42: Upper Radial Magnetic Bearing Stator
- 43: Lower Radial Magnetic Bearing Stator
- 50: Thrust Magnetic Bearing
- 51: Thrust Magnetic Bearing Rotor
- 52: Front Thrust Magnetic Bearing Stator
- 53: Rear Thrust Magnetic Bearing Stator
- 60: Front Protective Bearing
- 70: Rear Protective Bearing
- 90: Magnetic Bearing Control Device

## Claims

1. A magnetic bearing control device (90) for controlling a magnetic bearing device (10) including: a rotating body (A); a first magnetic bearing (B1) supporting the rotating body (A) in a first direction (D1), the first direction (D1) being one of an axial direction (X) or a radial direction (R) of the rotating body (A); a first protective bearing (C1) supporting the rotating body (A) in the first direction (D1) to reduce contact between the rotating body (A) and the first magnetic bearing (B 1); and a second protective bearing (C2) supporting the rotating body (A) in a second direction (D2), the second direction (D2) being the other one of the axial direction (X) or the radial direction (R) of the rotating body (A), wherein
the first magnetic bearing (B1) receives a first current (J1) to make a first electromagnetic force (F1) act on the rotating body (A) in the first direction (D1),
**characterised in that**
at a position adjustment time (Q) at which a first-direction position (H1) of the rotating body (A) in the first direction (D1) with respect to the first protective bearing (C1) is adjusted before magnetic levitation control is performed on the rotating body (A),
the magnetic bearing control device controls the first current (J1) to reduce a speed (U) of the rotating body (A) at a time of contact between the rotating body (A) and the first protective bearing (C1),
wherein
a first operation (M1) of supplying the first current (J1) of a predetermined value (J1v) and then stopping the supply of the first current (J1) and
a second operation (M2) of increasing the predetermined value (J1v) when the first-direction position (H1) of the rotating body (A) does not change from that before the supply of the first current (J1) and decreasing the predetermined value (J1v) when the first-direction position (H1) of the rotating body (A) has changed from that before the supply of the first current (J1), are repeatedly executed.

2. A magnetic bearing control device (90) for controlling a magnetic bearing device (10) including: a rotating body (A); a first magnetic bearing (B1) supporting the rotating body (A) in a first direction (D1), the first direction (D1) being one of an axial direction (X) or a radial direction (R) of the rotating body (A); a first protective bearing (C1) supporting the rotating body (A) in the first direction (D1) to reduce contact between the rotating body (A) and the first magnetic bearing (B 1); and a second protective bearing (C2) supporting the rotating body (A) in a second direction (D2), the second direction (D2) being the other one of the axial direction (X) or the radial direction (R) of the rotating body (A), wherein
the first magnetic bearing (B1) receives a first current (J1) to make a first electromagnetic force (F1) act on the rotating body (A) in the first direction (D1),
**characterised in that**
at a position adjustment time (Q) at which a first-direction position (H1) of the rotating body (A) in the first direction (D1) with respect to the first protective bearing (C1) is adjusted before magnetic levitation control is performed on the rotating body (A),
the magnetic bearing control device controls the first current (J1) to reduce a speed (U) of the rotating body (A) at a time of contact between the rotating body (A) and the first protective bearing (C1), wherein
a third operation (M3) of increasing the first current (J1) until a change in the first-direction position (H1) of the rotating body (A) is detected and
a fourth operation (M4) of reducing the first current (J1) to be in a range greater than zero after the change in the first-direction position (H1) of the rotating body (A) has been detected, are executed.

3. The magnetic bearing control device of claim 2, wherein the fourth operation (M4) reduces the first current (J1) to a predetermined value (J1v) greater than zero.

4. The magnetic bearing control device of claim 2 or 3, wherein the fourth operation (M4) reduces the first current (J1) such that the speed (U) of movement of the rotating body (A) in the first direction (D1) is constant.

5. The magnetic bearing control device of any one of claims 1 to 4, wherein at the position adjustment time (Q), the first current (J1) is supplied at a current change rate (δa) smaller than a maximum current change rate (δ'a) of a case in which magnetic levitation control is performed on the rotating body (A).

6. A magnetic bearing control device (90) for controlling a magnetic bearing device (10) including: a rotating body (A); a first magnetic bearing (B1) supporting the rotating body (A) in a first direction (D1), the first direction (D1) being one of an axial direction (X) or a radial direction (R) of the rotating body (A); a first protective bearing (C1) supporting the rotating body (A) in the first direction (D1) to reduce contact between the rotating body (A) and the first magnetic bearing (B 1); and a second protective bearing (C2) supporting the rotating body (A) in a second direction (D2), the second direction (D2) being the other one of the axial direction (X) or the radial direction (R) of the rotating body (A), wherein
the first magnetic bearing (B1) receives a first current (J1) to make a first electromagnetic force (F1) act on the rotating body (A) in the first direction (D1),
**characterised in that**
at a position adjustment time (Q) at which a first-direction position (H1) of the rotating body (A) in the first direction (D1) with respect to the first protective bearing (C1) is adjusted before magnetic levitation control is performed on the rotating body (A),
the magnetic bearing control device controls the first current (J1) to reduce a speed (U) of the rotating body (A) at a time of contact between the rotating body (A) and the first protective bearing (C1) , wherein the supply of the first current (J1) is stopped after a polarity of a first voltage (E1) to be applied to the first magnetic bearing (B1) is reversed.

7. A magnetic bearing control device (90) for controlling a magnetic bearing device (10) including: a rotating body (A); a first magnetic bearing (B1) supporting the rotating body (A) in a first direction (D1), the first direction (D1) being one of an axial direction (X) or a radial direction (R) of the rotating body (A); a first protective bearing (C1) supporting the rotating body (A) in the first direction (D1) to reduce contact between the rotating body (A) and the first magnetic bearing (B 1); and a second protective bearing (C2) supporting the rotating body (A) in a second direction (D2), the second direction (D2) being the other one of the axial direction (X) or the radial direction (R) of the rotating body (A), wherein
the first magnetic bearing (B1) receives a first current (J1) to make a first electromagnetic force (F1) act on the rotating body (A) in the first direction (D1),
**characterised in that**
at a position adjustment time (Q) at which a first-direction position (H1) of the rotating body (A) in the first direction (D1) with respect to the first protective bearing (C1) is adjusted before magnetic levitation control is performed on the rotating body (A),
the magnetic bearing control device controls the first current (J1) to reduce a speed (U) of the rotating body (A) at a time of contact between the rotating body (A) and the first protective bearing (C1), , wherein
the magnetic bearing device (10) includes a second magnetic bearing (B2) supporting the rotating body (A) in the second direction (D2), and
the second magnetic bearing (B2) receives a second current (J2) to make a second electromagnetic force (F2) act on the rotating body (A) in the second direction (D2), the axis (0) of the shaft (20) extends in the horizontal direction, and the second current (J2) is supplied to the second magnetic bearing (B2) such that a normal force (N) of the second protective bearing (C2) acting on the rotating body (A) is in a range smaller than that of when the supply of the first current (J1) and the second current (J2) is stopped, and greater than zero.

8. A magnetic bearing control device (90) for controlling a magnetic bearing device (10) including: a rotating body (A); a first magnetic bearing (B1) supporting the rotating body (A) in a first direction (D1), the first direction (D1) being one of an axial direction (X) or a radial direction (R) of the rotating body (A); a first protective bearing (C1) supporting the rotating body (A) in the first direction (D1) to reduce contact between the rotating body (A) and the first magnetic bearing (B 1); and a second protective bearing (C2) supporting the rotating body (A) in a second direction (D2), the second direction (D2) being the other one of the axial direction (X) or the radial direction (R) of the rotating body (A), wherein
the first magnetic bearing (B1) receives a first current (J1) to make a first electromagnetic force (F1) act on the rotating body (A) in the first direction (D1),
**characterised in that**
at a position adjustment time (Q) at which a first-direction position (H1) of the rotating body (A) in the first direction (D1) with respect to the first protective bearing (C1) is adjusted before magnetic levitation control is performed on the rotating body (A),
the magnetic bearing control device controls the first current (J1) to reduce a speed (U) of the rotating body (A) at a time of contact between the rotating body (A) and the first protective bearing (C1),
the magnetic bearing device (10) includes a second magnetic bearing (B2) supporting the rotating body (A) in the second direction (D2), and the second magnetic bearing (B2) receives a second current (J2) to make a second electromagnetic force (F2) act on the rotating body (A) in the second direction (D2),the axis (0) of the shaft (20) extends in the horizontal direction, and
the first current (J1) or the second current (J2) is supplied so as to vibrate the rotating body (A) in a circumferential direction (θ).

9. The magnetic bearing control device of any one of claims 7 to 8, wherein the second current (J2) is supplied such that the normal force (N) of the second protective bearing (C2) acting on the rotating body (A) is greater than that of when the supply of the first current (J1) and the second current (J2) is stopped, after the first-direction position (H1) of the rotating body (A) is changed.

10. The magnetic bearing control device of any one of claims 7 to 9, wherein the first direction (D1) is the axial direction (X); the second direction (D2) is the radial direction (R); the first magnetic bearing (B1) is a thrust magnetic bearing (50); and the second magnetic bearing (B2) is a radial magnetic bearing (40).

11. A magnetic bearing device comprising the magnetic bearing control device (90) of any one of claims 1 to 10.

12. A turbo machine comprising the magnetic bearing device (10) of claim 11.

## Patentansprüche

1. Magnetlager-Steuervorrichtung (90) zum Steuern einer Magnetlagervorrichtung (10), umfassend: einen Drehkörper (A); ein erstes Magnetlager (B1), das den Drehkörper (A) in einer ersten Richtung (D1) trägt, wobei die erste Richtung (D1) eine von einer axialen Richtung (X) oder einer radialen Richtung (R) des Drehkörpers (A) ist; ein erstes Schutzlager (C1), das den Drehkörper (A) in der ersten Richtung (D1) trägt, um den Kontakt zwischen dem Drehkörper (A) und dem ersten Magnetlager (B1) zu verringern; und ein zweites Schutzlager (C2), das den Drehkörper (A) in einer zweiten Richtung (D2) trägt, wobei die zweite Richtung (D2) die andere von der axialen Richtung (X) oder der radialen Richtung (R) des Drehkörpers (A) ist, wobei
das erste Magnetlager (B1) einen ersten Strom (J1) aufnimmt, um eine erste elektromagnetische Kraft (F1) auf den Drehkörper (A) in der ersten Richtung (D1) wirken zu lassen,
**dadurch gekennzeichnet, dass**
zu einer Positionseinstellzeit (Q), zu der eine Position (H1) des Drehkörpers (A) in der ersten Richtung (D1) in Bezug auf das erste Schutzlager (C1) eingestellt wird, bevor eine Magnetschwebesteuerung an dem Drehkörper (A) durchgeführt wird, die Magnetlager-Steuervorrichtung den ersten Strom (J1) steuert, um eine Geschwindigkeit (U) des Drehkörpers (A) zu einer Zeit des Kontakts zwischen dem Drehkörper (A) und dem ersten Schutzlager (C1) zu verringern,
wobei
eine erste Operation (M1) des Zuführens des ersten Stroms (J1) mit einem vorbestimmten Wert (J1v) und dann des Stoppens der Zufuhr des ersten Stroms (J1) und
eine zweite Operation (M2) des Erhöhens des vorbestimmten Werts (J1v), wenn sich die Position (H1) des Drehkörpers (A) in der ersten Richtung von der vor der Zufuhr des ersten Stroms (J1) nicht ändert, und des Verringerns des vorbestimmten Werts (J1v), wenn sich die Position (H1) des Drehkörpers (A) in der ersten Richtung von der vor der Zufuhr des ersten Stroms (J1) geändert hat, wiederholt ausgeführt werden.

2. Magnetlager-Steuervorrichtung (90) zum Steuern einer Magnetlagervorrichtung (10), umfassend: einen Drehkörper (A); ein erstes Magnetlager (B1), das den Drehkörper (A) in einer ersten Richtung (D1) trägt, wobei die erste Richtung (D1) eine von einer axialen Richtung (X) oder einer radialen Richtung (R) des Drehkörpers (A) ist; ein erstes Schutzlager (C1), das den Drehkörper (A) in der ersten Richtung (D1) trägt, um den Kontakt zwischen dem Drehkörper (A) und dem ersten Magnetlager (B1) zu verringern; und ein zweites Schutzlager (C2), das den Drehkörper (A) in einer zweiten Richtung (D2) trägt, wobei die zweite Richtung (D2) die andere von der axialen Richtung (X) oder der radialen Richtung (R) des Drehkörpers (A) ist, wobei
das erste Magnetlager (B1) einen ersten Strom (J1) aufnimmt, um eine erste elektromagnetische Kraft (F1) auf den Drehkörper (A) in der ersten Richtung (D1) wirken zu lassen,
**dadurch gekennzeichnet, dass**
zu einer Positionseinstellzeit (Q), zu der eine Position (H1) des Drehkörpers (A) in der ersten Richtung (D1) in Bezug auf das erste Schutzlager (C1) eingestellt wird, bevor eine Magnetschwebesteuerung an dem Drehkörper (A) durchgeführt wird, die Magnetlager-Steuervorrichtung den ersten Strom (J1) steuert, um eine Geschwindigkeit (U) des Drehkörpers (A) zu einer Zeit des Kontakts zwischen dem Drehkörper (A) und dem ersten Schutzlager (C1) zu verringern, wobei
eine dritte Operation (M3) des Erhöhens des ersten Stroms (J1), bis eine Änderung der Position (H1) des Drehkörpers (A) in der ersten Richtung erfasst wird, und
eine vierte Operation (M4) des Verringerns des ersten Stroms (J1), so dass er in einem Bereich größer als null ist, nachdem die Änderung der Position (H1) des Drehkörpers (A) in der ersten Richtung erfasst wurde, ausgeführt werden.

3. Magnetlager-Steuervorrichtung nach Anspruch 2, wobei die vierte Operation (M4) den ersten Strom (J1) auf einen vorbestimmten Wert (J1v) größer als null verringert.

4. Magnetlager-Steuervorrichtung nach Anspruch 2 oder 3, wobei die vierte Operation (M4) den ersten Strom (J1) derart verringert, dass die Geschwindigkeit (U) der Bewegung des Drehkörpers (A) in der ersten Richtung (D1) konstant ist.

5. Magnetlager-Steuervorrichtung nach einem der Ansprüche 1 bis 4, wobei zu der Positionseinstellzeit (Q) der erste Strom (J1) mit einer Stromänderungsrate (δa) zugeführt wird, die kleiner als eine maximale Stromänderungsrate (δ'a) eines Falls ist, in dem eine Magnetschwebesteuerung an dem Drehkörper (A) durchgeführt wird.

6. Magnetlager-Steuervorrichtung (90) zum Steuern einer Magnetlagervorrichtung (10), umfassend: einen Drehkörper (A); ein erstes Magnetlager (B1), das den Drehkörper (A) in einer ersten Richtung (D1) trägt, wobei die erste Richtung (D1) eine von einer axialen Richtung (X) oder einer radialen Richtung (R) des Drehkörpers (A) ist; ein erstes Schutzlager (C1), das den Drehkörper (A) in der ersten Richtung (D1) trägt, um den Kontakt zwischen dem Drehkörper (A) und dem ersten Magnetlager (B1) zu verringern; und ein zweites Schutzlager (C2), das den Drehkörper (A) in einer zweiten Richtung (D2) trägt, wobei die zweite Richtung (D2) die andere von der axialen Richtung (X) oder der radialen Richtung (R) des Drehkörpers (A) ist, wobei
das erste Magnetlager (B1) einen ersten Strom (J1) aufnimmt, um eine erste elektromagnetische Kraft (F1) auf den Drehkörper (A) in der ersten Richtung (D1) wirken zu lassen,
**dadurch gekennzeichnet, dass**
zu einer Positionseinstellzeit (Q), zu der eine Position (H1) des Drehkörpers (A) in der ersten Richtung (D1) in Bezug auf das erste Schutzlager (C1) eingestellt wird, bevor eine Magnetschwebesteuerung an dem Drehkörper (A) durchgeführt wird, die Magnetlager-Steuervorrichtung den ersten Strom (J1) steuert, um eine Geschwindigkeit (U) des Drehkörpers (A) zu einer Zeit des Kontakts zwischen dem Drehkörper (A) und dem ersten Schutzlager (C1) zu verringern, wobei die Zufuhr des ersten Stroms (J1) gestoppt wird, nachdem eine Polarität einer ersten Spannung (E1), die an das erste Magnetlager (B1) anzulegen ist, umgekehrt wird.

7. Magnetlager-Steuervorrichtung (90) zum Steuern einer Magnetlagervorrichtung (10), umfassend: einen Drehkörper (A); ein erstes Magnetlager (B1), das den Drehkörper (A) in einer ersten Richtung (D1) trägt, wobei die erste Richtung (D1) eine von einer axialen Richtung (X) oder einer radialen Richtung (R) des Drehkörpers (A) ist; ein erstes Schutzlager (C1), das den Drehkörper (A) in der ersten Richtung (D1) trägt, um den Kontakt zwischen dem Drehkörper (A) und dem ersten Magnetlager (B1) zu verringern; und ein zweites Schutzlager (C2), das den Drehkörper (A) in einer zweiten Richtung (D2) trägt, wobei die zweite Richtung (D2) die andere von der axialen Richtung (X) oder der radialen Richtung (R) des Drehkörpers (A) ist, wobei
das erste Magnetlager (B1) einen ersten Strom (J1) aufnimmt, um eine erste elektromagnetische Kraft (F1) auf den Drehkörper (A) in der ersten Richtung (D1) wirken zu lassen,
**dadurch gekennzeichnet, dass**
zu einer Positionseinstellzeit (Q), zu der eine Position (H1) des Drehkörpers (A) in der ersten Richtung (D1) in Bezug auf das erste Schutzlager (C1) eingestellt wird, bevor eine Magnetschwebesteuerung an dem Drehkörper (A) durchgeführt wird, die Magnetlager-Steuervorrichtung den ersten Strom (J1) steuert, um eine Geschwindigkeit (U) des Drehkörpers (A) zu einer Zeit des Kontakts zwischen dem Drehkörper (A) und dem ersten Schutzlager (C1) zu verringern, wobei
die Magnetlagervorrichtung (10) ein zweites Magnetlager (B2) umfasst, das den Drehkörper (A) in der zweiten Richtung (D2) trägt, und
das zweite Magnetlager (B2) einen zweiten Strom (J2) aufnimmt, um eine zweite elektromagnetische Kraft (F2) auf den Drehkörper (A) in der zweiten Richtung (D2) wirken zu lassen, wobei sich die Achse (0) der Welle (20) in der horizontalen Richtung erstreckt, und der zweite Strom (J2) dem zweiten Magnetlager (B2) zugeführt wird, so dass eine Normalkraft (N) des zweiten Schutzlagers (C2), die auf den Drehkörper (A) wirkt, in einem Bereich liegt, der kleiner als der ist, wenn die Zufuhr des ersten Stroms (J1) und des zweiten Stroms (J2) gestoppt wird, und größer als null ist.

8. Magnetlager-Steuervorrichtung (90) zum Steuern einer Magnetlagervorrichtung (10), umfassend: einen Drehkörper (A); ein erstes Magnetlager (B1), das den Drehkörper (A) in einer ersten Richtung (D1) trägt, wobei die erste Richtung (D1) eine von einer axialen Richtung (X) oder einer radialen Richtung (R) des Drehkörpers (A) ist; ein erstes Schutzlager (C1), das den Drehkörper (A) in der ersten Richtung (D1) trägt, um den Kontakt zwischen dem Drehkörper (A) und dem ersten Magnetlager (B1) zu verringern; und ein zweites Schutzlager (C2), das den Drehkörper (A) in einer zweiten Richtung (D2) trägt, wobei die zweite Richtung (D2) die andere von der axialen Richtung (X) oder der radialen Richtung (R) des Drehkörpers (A) ist, wobei
das erste Magnetlager (B1) einen ersten Strom (J1) aufnimmt, um eine erste elektromagnetische Kraft (F1) auf den Drehkörper (A) in der ersten Richtung (D1) wirken zu lassen,
**dadurch gekennzeichnet, dass**
zu einer Positionseinstellzeit (Q), zu der eine Position (H1) des Drehkörpers (A) in der ersten Richtung (D1) in Bezug auf das erste Schutzlager (C1) eingestellt wird, bevor eine Magnetschwebesteuerung an dem Drehkörper (A) durchgeführt wird, die Magnetlager-Steuervorrichtung den ersten Strom (J1) steuert, um eine Geschwindigkeit (U) des Drehkörpers (A) zu einer Zeit des Kontakts zwischen dem Drehkörper (A) und dem ersten Schutzlager (C1) zu verringern,
die Magnetlagervorrichtung (10) ein zweites Magnetlager (B2) umfasst, das den Drehkörper (A) in der zweiten Richtung (D2) trägt, und das zweite Magnetlager (B2) einen zweiten Strom (J2) aufnimmt, um eine zweite elektromagnetische Kraft (F2) auf den Drehkörper (A) in der zweiten Richtung (D2) wirken zu lassen, wobei sich die Achse (0) der Welle (20) in der horizontalen Richtung erstreckt, und
der erste Strom (J1) oder der zweite Strom (J2) zugeführt wird, um den Drehkörper (A) in einer Umfangsrichtung (θ) vibrieren zu lassen.

9. Magnetlager-Steuervorrichtung nach einem der Ansprüche 7 bis 8, wobei der zweite Strom (J2) derart zugeführt wird, dass die Normalkraft (N) des zweiten Schutzlagers (C2), die auf den Drehkörper (A) wirkt, größer als die ist, wenn die Zufuhr des ersten Stroms (J1) und des zweiten Stroms (J2) gestoppt wird, nachdem die Position (H1) des Drehkörpers (A) in der ersten Richtung geändert wurde.

10. Magnetlager-Steuervorrichtung nach einem der Ansprüche 7 bis 9, wobei die erste Richtung (D1) die axiale Richtung (X) ist; die zweite Richtung (D2) die radiale Richtung (R) ist; das erste Magnetlager (B1) ein Axialmagnetlager (50) ist; und das zweite Magnetlager (B2) ein Radialmagnetlager (40) ist.

11. Magnetlagervorrichtung, die die Magnetlager-Steuervorrichtung (90) nach einem der Ansprüche 1 bis 10 umfasst.

12. Turbomaschine, die die Magnetlagervorrichtung (10) nach Anspruch 11 umfasst.

## Revendications

1. Dispositif de commande de palier magnétique (90) pour gérer un dispositif de palier magnétique (10) comprenant : un corps rotatif (A) ; un premier palier magnétique (B1) supportant le corps rotatif (A) dans une première direction (D1), la première direction (D1) étant une d'une direction axiale (X) ou d'une direction radiale (R) du corps rotatif (A) ; un premier palier protecteur (C1) supportant le corps rotatif (A) dans la première direction (D1) afin de réduire le contact entre le corps rotatif (A) et le premier palier magnétique (B1) ; et un deuxième palier protecteur (C2) supportant le corps rotatif (A) dans une deuxième direction (D2), la deuxième direction (D2) étant l'autre de la direction axiale (X) ou de la direction radiale (R) du corps rotatif (A),
le premier palier magnétique (B1) recevant un premier courant (J1) pour faire en sorte qu'une première force électromagnétique (F1) agisse sur le corps rotatif (A) dans la première direction (D1),
**caractérisé en ce que**
à un moment d'ajustement de la position (Q) auquel est ajustée une position de première direction (H1) du corps rotatif (A) dans la première direction (D1) relativement au premier palier protecteur (C1) avant l'exécution de la commande de lévitation magnétique sur le corps rotatif (A), le dispositif de commande de palier magnétique commande au premier courant (J1) de réduire une vitesse (U) du corps rotatif (A) à un moment de contact entre le corps rotatif (A) et le premier palier protecteur (C1),
une première opération (M1) de fourniture du premier courant (J1) d'une valeur prédéterminée (J1v) suivie de la cessation de la fourniture du premier courant (J1), et
une deuxième opération (M2) d'augmentation de la valeur prédéterminée (J1v) lorsque la première direction (H1) du corps rotatif (A) ne change pas par rapport à celle qui précède la fourniture du premier courant (J1), et de diminution de la valeur prédéterminée (J1v) lorsque la position de la première direction (H1) du corps rotatif (A) a changé par rapport à celle qui précède la fourniture du premier courant (J1),
sont exécutées de façon répétée.

2. Dispositif de commande de palier magnétique (90) pour gérer un dispositif de palier magnétique (10) comprenant : un corps rotatif (A) ; un premier palier magnétique (B1) supportant le corps rotatif (A) dans une première direction (D1), la première direction (D1) étant une d'une direction axiale (X) ou d'une direction radiale (R) du corps rotatif (A) ; un premier palier protecteur (C1) supportant le corps rotatif (A) dans la première direction (D1) afin de réduire le contact entre le corps rotatif (A) et le premier palier magnétique (B1) ; et un deuxième palier protecteur (C2) supportant le corps rotatif (A) dans une deuxième direction (D2), la deuxième direction (D2) étant l'autre de la direction axiale (X) ou de la direction radiale (R) du corps rotatif (A),
le premier palier magnétique (B1) recevant un premier courant (J1) pour faire en sorte qu'une première force électromagnétique (F1) agisse sur le corps rotatif (A) dans la première direction (D1),
**caractérisé en ce que**
à un moment d'ajustement de la position (Q) auquel est ajustée une position de première direction (H1) du corps rotatif (A) dans la première direction (D1) relativement au premier palier protecteur (C1) avant l'exécution de la commande de lévitation magnétique sur le corps rotatif (A), le dispositif de commande de palier magnétique commande au premier courant (J1) de réduire une vitesse (U) du corps rotatif (A) à un moment de contact entre le corps rotatif (A) et le premier palier protecteur (C1),
une troisième opération (M3) d'augmentation du premier courant (J1) jusqu'à ce que soit détecté un changement dans la position de première direction (H1) du corps rotatif (A), et
une quatrième opération (M4) de réduction du premier courant (J1) afin qu'il se trouve dans une plage supérieure à zéro après la détection du changement dans la position de première direction (H1) du corps rotatif (A),
sont exécutées.

3. Dispositif de commande de palier magnétique selon la revendication 2, la quatrième opération (M4) réduisant le premier courant (J1) sur une valeur prédéterminée (J1v) supérieure à zéro.

4. Dispositif de commande de palier magnétique selon la revendication 2 ou 3, la quatrième opération (M4) réduisant le premier courant (J1) de sorte que la vitesse (U) du mouvement du corps rotatif (A) dans la première direction (D1) soit constante.

5. Dispositif de commande de palier magnétique selon une quelconque des revendication 1 à 4, le premier courant (J1) étant fourni, au moment d'ajustement de la position (Q), à un taux de variation de courant (δa) inférieur à un taux maximum de variation de courant (δ'a) dans un cas où une commande de lévitation magnétique est effectuée sur le corps rotatif (A).

6. Dispositif de commande de palier magnétique (90) pour gérer un dispositif de palier magnétique (10) comprenant : un corps rotatif (A) ; un premier palier magnétique (B1) supportant le corps rotatif (A) dans une première direction (D1), la première direction (D1) étant une d'une direction axiale (X) ou d'une direction radiale (R) du corps rotatif (A) ; un premier palier protecteur (C1) supportant le corps rotatif (A) dans la première direction (D1) afin de réduire le contact entre le corps rotatif (A) et le premier palier magnétique (B1) ; et un deuxième palier protecteur (C2) supportant le corps rotatif (A) dans une deuxième direction (D2), la deuxième direction (D2) étant l'autre de la direction axiale (X) ou de la direction radiale (R) du corps rotatif (A),
le premier palier magnétique (B1) recevant un premier courant (J1) pour faire en sorte qu'une première force électromagnétique (F1) agisse sur le corps rotatif (A) dans la première direction (D1),
**caractérisé en ce que**
à un moment d'ajustement de la position (Q) auquel est ajustée une position de première direction (H1) du corps rotatif (A) dans la première direction (D1) relativement au premier palier protecteur (C1) avant l'exécution de la commande de lévitation magnétique sur le corps rotatif (A), le dispositif de commande de palier magnétique commande au premier courant (J1) de réduire une vitesse (U) du corps rotatif (A) à un moment de contact entre le corps rotatif (A) et le premier palier protecteur (C1), la fourniture du premier courant (J1) étant arrêtée après l'inversion d'une polarité d'une première tension (E1) devant être appliquée sur le premier palier magnétique (B1).

7. Dispositif de commande de palier magnétique (90) pour gérer un palier magnétique (10) comprenant : un corps rotatif (A) ; un premier palier magnétique (B1) supportant le corps rotatif (A) dans une première direction (D1), la première direction (D1) étant une d'une direction axiale (X) ou d'une direction radiale (R) du corps rotatif (A) ; un premier palier protecteur (C1) supportant le corps rotatif (A) dans la première direction (D1) afin de réduire le contact entre le corps rotatif (A) et le premier palier magnétique (B1); et un deuxième palier protecteur (C2) supportant le corps rotatif (A) dans une deuxième direction (D2), la deuxième direction (D2) étant l'autre de la direction axiale (X) ou de la direction radiale (R) du corps rotatif (A),
le premier palier magnétique (B1) recevant un premier courant (J1) pour faire en sorte qu'une première force électromagnétique (F1) agisse sur le corps rotatif (A) dans la première direction (D1),
**caractérisé en ce que**
à un moment d'ajustement de la position (Q) auquel est ajustée une position de première direction (H1) du corps rotatif (A) dans la première direction (D1) relativement au premier palier protecteur (C1) avant l'exécution de la commande de lévitation magnétique sur le corps rotatif (A), le dispositif de commande de palier magnétique commande au premier courant (J1) de réduire la vitesse (U) du corps rotatif (A) à un moment de contact entre le corps rotatif (A) et le premier palier protecteur (C1),
le dispositif de palier magnétique (10) comprend un deuxième palier magnétique (B2) supportant le corps rotatif (A) dans la deuxième direction (D2), et
le deuxième palier magnétique (B2) reçoit un deuxième courant (J2) pour faire en sorte qu'une deuxième force électromagnétique (F2) agisse sur le corps rotatif (A) dans la deuxième direction (D2), l'axe (0) de l'arbre (20) s'étendant dans la direction horizontale, et le deuxième courant (J2) étant fourni au deuxième palier magnétique (B2) de sorte qu'une force normale (N) du deuxième palier protecteur (C2) agissant sur le corps rotatif (A) se trouve dans une plage plus petite que la plage présente lors de la cessation de la fourniture du premier courant (J1) et du deuxième courant (J2), et supérieure à zéro.

8. Dispositif de commande de palier magnétique (90) pour gérer un dispositif de palier magnétique (10) comprenant : un corps rotatif (A) ; un premier palier magnétique (B1) supportant le corps rotatif (A) dans une première direction (D1), la première direction (D1) étant une d'une direction axiale (X) ou d'une direction radiale (R) du corps rotatif (A) ; un premier palier protecteur (C1) supportant le corps rotatif (A) dans la première direction (D1) afin de réduire le contact entre le corps rotatif (A) et le premier palier magnétique (B1) ; et un deuxième palier protecteur (C2) supportant le corps rotatif (A) dans une deuxième direction (D2), la deuxième direction (D2) étant l'autre de la direction axiale (X) ou de la direction radiale (R) du corps rotatif (A),
le premier palier magnétique (B1) recevant un premier courant (J1) pour faire en sorte qu'une première force électromagnétique (F1) agisse sur le corps rotatif (A) dans la première direction (D1),
**caractérisé en ce que**
à un moment d'ajustement de la position (Q) auquel est ajustée une position de première direction (H1) du corps rotatif (A) dans la première direction (D1) relativement au premier palier protecteur (C1) avant l'exécution de la commande de lévitation magnétique sur le corps rotatif (A), le dispositif de commande de palier magnétique commande au premier courant (J1) de réduire la vitesse (U) du corps rotatif (A) à un moment de contact entre le corps rotatif (A) et le premier palier protecteur (C1),
le dispositif de palier magnétique (10) comprend un deuxième palier magnétique (B2) supportant le corps rotatif (A) dans la deuxième direction (D2), et le deuxième palier magnétique (B2) reçoit un deuxième courant (J2) afin qu'une deuxième force électromagnétique (F2) agisse sur le corps rotatif (A) dans la deuxième direction (D2), l'axe (0) de l'arbre (20) s'étend dans la direction horizontale, et le premier courant (J1) ou le deuxième courant (J2) est fourni de façon à faire vibrer le corps rotatif (A) dans une direction circonférentielle (θ).

9. Dispositif de commande de palier magnétique selon une quelconque des revendications 7 à 8, le deuxième courant (J2) étant fourni de façon à ce que la force normale (N) du deuxième palier protecteur (C2) agissant sur le corps rotatif (A) soit supérieure à la force présente lors de la cessation de la fourniture du premier courant (J1) et du deuxième courant (J2), après le changement de la position de première direction (H1) du corps rotatif (A).

10. Dispositif de commande de palier magnétique selon une quelconque des revendications 7 à 9, la première direction (D1) étant la direction axiale (X) ; la deuxième direction (D2) étant la direction radiale (R) ; le premier palier magnétique (B1) étant un palier magnétique de butée (50) ; et le deuxième palier magnétique (B2) étant un palier magnétique radial (40).

11. Dispositif de palier magnétique comprenant le dispositif de commande de palier magnétique (90) selon une quelconque des revendications 1 à 10.

12. Turbomoteur comprenant le dispositif de palier magnétique (10) selon la revendication 11.
